# EUROPEAN PATENT APPLICATION

(11) **EP 4 451 771 A1**
(43) Date of publication of application: **23.10.2024**
(21) Application number: 23737016.8
(22) Date of filing: 04.01.2023
(51) Int. Cl.: H04W 72/04

(54) **METHOD AND APPARATUS USED IN NODE FOR WIRELESS COMMUNICATION**

(30) Priority: 07.01.2022 CN 202210016116
(71) Applicant: SHANGHAI LANGBO COMMUNICATION TECHNOLOGY COMPANY LIMITED, Shanghai 200240 (CN)
(72) Inventor: HU, Yang, Shanghai 201206 (CN); ZHANG, Xiaobo, Shanghai 201206 (CN)
(74) Representative: Zhang, Fan
(86) International application number: PCT/CN2023/070307
(87) International publication number: WO 2023/131152

(57) **Abstract**

Disclosed in the present application are a method and apparatus used in a node for wireless communication. A first transmitter transmits first information on a first wireless channel, the first information indicating a first reference power value, wherein the determination of the first reference power value is performed on the basis of an MPR under a first waveform condition, the first wireless channel uses a second waveform, and the first waveform and the second waveform are respectively two different physical layer waveforms.

## Description

### BACKGROUND

### TECHNICAL FIELD

The present application relates to transmission methods and devices in wireless communication systems, and in particular to a transmission method and device of a radio signal in a wireless communication system supporting cellular networks.

### RELATED ART

In uplink transmission, using different physical layer waveforms for different scenarios can effectively improve communication efficiency. Dynamic waveform switching is an effective means to enhance the scheduling performance at the base station side; how to enhance the reporting of power-related information is an important aspect to consider when implementing the function of dynamic waveform switching.

### SUMMARY

To address the above problem, the present application provides a solution. It should be noted that the above description uses dynamic waveform switching of uplink as an example; the present application is equally applicable to other scenarios such as those using semi-persistent waveform switching, systems supporting the use of multiple physical layer waveforms, sidelink, IoT (Internet of Things), Internet of Vehicles (IoV), NTN (non-terrestrial networks), etc., where similar technical effects can be achieved. In addition, the adoption of a unified solution for different scenarios (including, but not limited to, dynamic waveform switching, semi-persistent waveform switching, systems supporting the use of multiple physical layer waveforms, uplink, sidelink, IoT, IoV, and NTN) can also help to reduce the hardware complexity and cost, or to improve performance. If no conflict is incurred, embodiments in any node in the present application and the characteristics of the embodiments can also be applicable to any other node, and vice versa. And the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:
transmitting first information on a first radio channel, the first information indicating a first reference power value;
herein, a determination of the first reference power value is based on MPR under a condition of a first waveform, and the first radio channel adopts a second waveform; the first waveform and the second waveform are two different physical layer waveforms.

In one embodiment, advantages of the above method comprise: decoupling a waveform used to determine the first reference power value from a waveform employed by the first radio channel, so as to improve flexibility in reporting or base station scheduling.

In one embodiment, advantages of the above method comprise: being beneficial for the base station to flexibly select transmission waveforms, thus improving the transmission performance of uplink.

In one embodiment, advantages of the above method comprise: being able to report power information more timely, thus improving the accuracy of waveform selection.

In one embodiment, advantages of the above method comprise: avoiding the situation where the base station have to schedule and use inappropriate waveforms to achieve signal transmission in order to obtain power-related information.

In one embodiment, advantages of the above method comprise: being beneficial for saving UE transmit power.

In one embodiment, advantages of the above method comprise: being beneficial for reducing interference.

In one embodiment, advantages of the above method comprise: being beneficial for improving spectral efficiency.

According to one aspect of the present application, the above method is characterized in comprising:
transmitting second information on the first radio channel, the second information indicating at least a former of a first power headroom and first maximum output power;
herein, the first maximum output power is used to determine the first power headroom, and a determination of the first maximum output power is based on a maximum power reduction (MPR) under the second waveform condition.

According to one aspect of the present application, the above method is characterized in comprising:
transmitting third information on the first radio channel, the third information indicating target maximum output power;
herein, the target maximum output power is used to determine the first reference power value, and a determination of the target maximum output power is based on the MPR under the condition of the first waveform.

According to one aspect of the present application, the above method is characterized in comprising:
transmitting fourth information;
herein, the fourth information is used to indicate whether a determination of the first reference power value is based on MPR under the condition of the first waveform or MPR under the second waveform condition.

According to one aspect of the present application, the above method is characterized in that
at least a first condition is used to determine whether a calculation of the first reference power value is based on MPR under the condition of the first waveform or MPR under the second waveform condition; the first condition comprises: whether a power headroom calculated based on MPR under the second waveform condition is greater than or not less than a first threshold.

In one embodiment, advantages of the above method comprise: the base station can obtain information on a power headroom calculated based on MPR under the condition of the first waveform while also obtaining information on a power headroom calculated based on MPR under the second waveform condition.

In one embodiment, advantages of the above method comprise: saving the overhead of a control signaling.

According to one aspect of the present application, the above method is characterized in comprising:
receiving a first signaling;
herein, the first signaling is used to indicate whether a calculation of the first reference power value is based on MPR under the condition of the first waveform or MPR under the second waveform condition.

In one embodiment, advantages of the above method comprise: having good flexibility.

According to one aspect of the present application, the above method is characterized in that
the first reference power value is associated with a first carrier of a first serving cell; at least a second condition is used to determine whether a determination of the first reference power value is based on MPR under the condition of the first waveform or MPR under the second waveform condition; the second condition comprises: a power headroom of the first carrier of the first serving cell reported for the most recent consecutive K2 times is not calculated based on MPR under the condition of the first waveform, or, a power headroom of the first carrier of the reported first serving cell is not calculated based on MPR under the condition of the first waveform.

In one embodiment, advantages of the above method comprise: avoiding the negative impact on the scheduling decision on the base station side of not reporting the power headroom determined based on MPR under the condition of the first waveform for too long.

In one embodiment, advantages of the above method comprise: saving the overhead of a control signaling.

According to one aspect of the present application, the above method is characterized in that
the first reference power value is used to determine an offset between maximum output power calculated under the condition of the first waveform and the first maximum output power.

According to one aspect of the present application, the above method is characterized in that
the first reference power value is used to determine a difference value of a power headroom calculated under the condition of the first waveform compared to the first power headroom.

The present application provides a method in a second node for wireless communications, comprising:
receiving first information on a first radio channel, the first information indicating a first reference power value;
herein, a determination of the first reference power value is based on MPR under a condition of a first waveform, and the first radio channel adopts a second waveform; the first waveform and the second waveform are two different physical layer waveforms.

According to one aspect of the present application, the above method is characterized in comprising:
receiving second information on the first radio channel, the second information indicating at least a former of a first power headroom and first maximum output power;
herein, the first maximum output power is used to determine the first power headroom, and a determination of the first maximum output power is based on MPR under the second waveform condition.

According to one aspect of the present application, the above method is characterized in comprising:
receiving third information on the first radio channel, the third information indicating target maximum output power;
herein, the target maximum output power is used to determine the first reference power value, and a determination of the target maximum output power is based on the MPR under the condition of the first waveform.

According to one aspect of the present application, the above method is characterized in comprising:
receiving fourth information;
herein, the fourth information is used to indicate whether a determination of the first reference power value is based on MPR under the condition of the first waveform or MPR under the second waveform condition.

According to one aspect of the present application, the above method is characterized in that
at least a first condition is used to determine whether a calculation of the first reference power value is based on MPR under the condition of the first waveform or MPR under the second waveform condition; the first condition comprises: whether a power headroom calculated based on MPR under the second waveform condition is greater than or not less than a first threshold.

According to one aspect of the present application, the above method is characterized in comprising:
transmitting a first signaling;
herein, the first signaling is used to indicate whether a calculation of the first reference power value is based on MPR under the condition of the first waveform or MPR under the second waveform condition.

According to one aspect of the present application, the above method is characterized in that
the first reference power value is associated with a first carrier of a first serving cell; at least a second condition is used to determine whether a determination of the first reference power value is based on MPR under the condition of the first waveform or MPR under the second waveform condition; the second condition comprises: a power headroom of the first carrier of the first serving cell reported for the most recent consecutive K2 times is not calculated based on MPR under the condition of the first waveform, or, a power headroom of the first carrier of the reported first serving cell is not calculated based on MPR under the condition of the first waveform.

According to one aspect of the present application, the above method is characterized in that
the first reference power value is used to determine an offset between maximum output power calculated under the condition of the first waveform and the first maximum output power.

According to one aspect of the present application, the above method is characterized in that
the first reference power value is used to determine a difference value between a calculated power headroom under the condition of the first waveform compared to the first power headroom.

The present application provides a first node for wireless communications, comprising:
a first transmitter, transmitting first information on a first radio channel, the first information indicating a first reference power value;
herein, a determination of the first reference power value is based on MPR under a condition of a first waveform, and the first radio channel adopts a second waveform; the first waveform and the second waveform are two different physical layer waveforms.

The present application provides a second node for wireless communications, comprising:
a second receiver, receiving first information on a first radio channel, the first information indicating a first reference power value;
herein, a determination of the first reference power value is based on MPR under a condition of a first waveform, and the first radio channel adopts a second waveform; the first waveform and the second waveform are two different physical layer waveforms.

In one embodiment, the method in the present application is advantageous in the following aspects:
- . enhancing the uplink transmission performance;
- . improving the flexibility in information reporting or base station scheduling;
- . improving the spectral efficiency;
- . improving the accuracy of waveform selection;
- . being beneficial for saving UE transmit power;
- . being beneficial for reducing interference.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of the processing of a first node according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of a first communication device and a second communication device according to one embodiment of the present application;
FIG. 5 illustrates a flowchart of signal transmission according to one embodiment of the present application;
FIG. 6 illustrate a schematic diagram of relations among a first node, a second signaling and a first radio channel according to one embodiment of the present application;
FIG. 7 illustrates a schematic diagram of relations among MPR under the condition of the first waveform, a target lower limit power value, and a first reference power value according to one embodiment of the present application;
FIG. 8 illustrates a schematic diagram of relations among MPR under a condition of a first waveform, a target lower limit power value, target maximum output power and a first reference power value according to one embodiment of the present application;
FIG. 9 illustrates a schematic diagram of relations among a first node, second information, MPR under a second waveform condition, first maximum output power, and a first power headroom according to one embodiment of the present application;
FIG. 10 illustrates a schematic diagram of relations among MPR under a second waveform condition, a first lower limit power value, and first maximum output power according to one embodiment of the present application;
FIG. 11 illustrates a schematic diagram of a first reference power value according to one embodiment of the present application;
FIG. 12 illustrates a schematic diagram of relations among a first node, third information, MPR under a condition of a first waveform, target maximum output power, and a first reference power value according to one embodiment of the present application;
FIG. 13 illustrates a schematic diagram of relations among a first node, fourth information and a first reference power value according to one embodiment of the present application;
FIG. 14 illustrates a schematic diagram of a relation between a first condition and a first reference power value according to one embodiment of the present application;
FIG. 15 illustrates a schematic diagram of relations among a first node, a first signaling and a first reference power value according to one embodiment of the present application;
FIG. 16 illustrates a schematic diagram of a relation between a second condition and a first reference power value according to one embodiment of the present application;
FIG. 17 illustrates a structure block diagram of a processor in a first node according to one embodiment of the present application;
FIG. 18 illustrates a structure block diagram of a processor in second node according to one embodiment of the present application.

### DESCRIPTION OF THE EMBODIMENTS

The technical solution of the present application will be further described in detail below in combination with the drawings. It should be noted that, in the case of no conflict, the embodiments of the present application and the features in the embodiments may be combined with each other arbitrarily.

### Embodiment 1

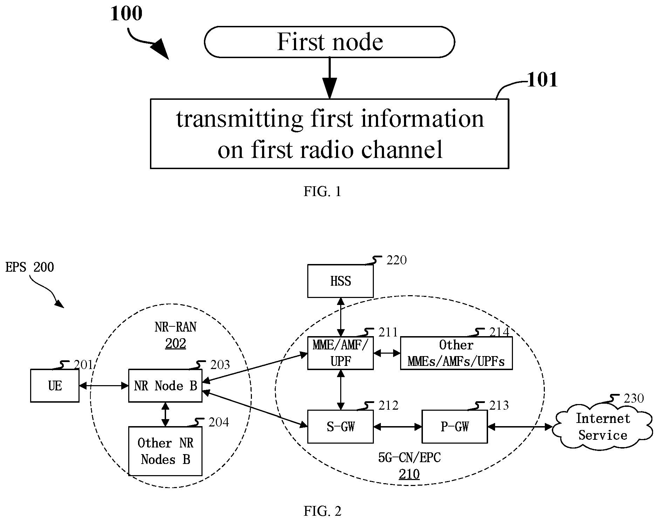

Embodiment 1 illustrates a flowchart of processing of a first node according to one embodiment of the present application, as shown in FIG. 1.

In Embodiment 1, the first node in the present application transmits first information on a first radio channel in step 101.

In embodiment 1, the first information indicates a first reference power value; a determination of the first reference power value is based on MPR under a condition of a first waveform, and the first radio channel adopts a second waveform; the first waveform and the second waveform are two different physical layer waveforms.

In one embodiment, the first radio channel is a physical layer channel.

In one embodiment, the first radio channel is an uplink channel.

In one embodiment, the first radio channel comprises a PUSCH (Physical Uplink Shared Channel).

In one embodiment, the first radio channel is a PUSCH.

In one embodiment, the first radio channel is scheduled by DCI format or configured by configured grant.

In one embodiment, the first radio channel is used to carry the first information.

In one embodiment, bits in at least the first information are transmitted on the first radio channel after undergoing at least part of CRC attachment, code block segmentation, code block CRC attachment, channel coding, rate matching, code block concatenation, scrambling, modulation, layer mapping, transform precoding, precoding, resource block mapping, multicarrier symbol generation, and modulation and upconversion.

In one embodiment, bits in at least the first information is transmitted on the first radio channel after undergoing at least part of CRC attachment, Code block segmentation, Code block CRC attachment, Channel coding, Rate matching, Code block concatenation, Scrambling, Modulation, Layer mapping, Transform precoding, Precoding, Mapping to virtual resource blocks and Mapping from virtual to physical resource blocks.

In one embodiment, a TB bearing bits in at least the first information is transmitted on the first radio channel.

In one embodiment, a TB comprising bits in the first information is transmitted on the first radio channel after at least channel encoding.

In one embodiment, a transmission of the first information occupies the first radio channel.

In one embodiment, the first information comprises at least one bit.

In one embodiment, the first information consists of 6 bits.

In one embodiment, the first information consists of up to 8 bits.

In one embodiment, the first information consists of up to 16 bits.

In one embodiment, the first information is represented by at least one bit.

In one embodiment, the first information is represented by 6 bits.

In one embodiment, the first information is represented by up to 8 bits.

In one embodiment, the first information is represented by up to 16 bits.

In one embodiment, the first information is a physical-layer signaling.

In one embodiment, the first information is DCI (Downlink control information) format.

In one embodiment, the first information is one of DCI format 0_0, DCI format 0_1, or DCI format 0_2.

In one embodiment, the first information is DCI format 0_0, and for the specific meaning of the DCI format 0_0, refer to chapter 7.3.1.1 in 3GPP TS38.212.

In one embodiment, the first information is DCI format 0_1, and for the specific meaning of the DCI format 0_1, refer to chapter 7.3.1.1 in 3GPP TS38.212.

In one embodiment, the first information is DCI format 0_2, and for the specific meaning of the DCI format 0_2, refer to chapter 7.3.1.1 in 3GPP TS38.212.

In one embodiment, the first information is one of DCI format 1_0, DCI format 1_1 or DCI format 1_2.

In one embodiment, the first information is DCI format 1_0, and for the specific meaning of the DCI format 1_0, refer to chapter 7.3.1.2 in 3GPP TS38.212.

In one embodiment, the first information is DCI format 1_1, and for the specific meaning of the DCI format 1_1, refer to chapter 7.3.1.2 in 3GPP TS38.212.

In one embodiment, the first information is DCI format 1_2, and for the specific meaning of the DCI format 1_2, refer to chapter 7.3.1.2 in 3GPP TS38.212.

In one embodiment, the first information comprises one or multiple fields in a DCI format.

In one embodiment, the first information is an uplink grant signaling.

In one embodiment, the first information is a higher-layer signaling.

In one embodiment, the first information is an RRC signaling.

In one embodiment, the first information comprises one or multiple fields in an RRC signaling.

In one embodiment, the first information comprises an IE.

In one embodiment, the first information comprises one or multiple fields in an IE.

In one embodiment, the first information is a Medium Access Control layer Control Element (MAC CE).

In one embodiment, the first information comprises one or multiple fields in a MAC CE.

In one embodiment, the first information belongs to a MAC CE.

In one embodiment, the first information belongs to a MAC CE related to a PHR (Power headroom report).

In one embodiment, the first information belongs to a Single Entry PHR MAC CE.

In one embodiment, the first information belongs to a Multiple Entry PHR MAC CE.

In one embodiment, the first information belongs to a MAC CE identified by a MAC subheader with a value of 54 in an LCID field.

In one embodiment, the first information belongs to a MAC CE identified by a MAC subheader with a value of 56 in an LCID field.

In one embodiment, the first information belongs to a MAC CE identified by a MAC subheader with a value of 57 in an LCID field.

In one embodiment, the first information explicitly indicates the first reference power value.

In one embodiment, the first information implicitly indicates the first reference power value.

In one embodiment, the expression that "a determination of the first reference power value" comprises: a calculation of the first reference power value.

In one embodiment, the expression that "a determination of the first reference power value" and "a calculation of the first reference power value" in the present application are equivalent or interchangeable.

In one embodiment, the MPR in the present application is a power related parameter.

In one embodiment, the MPR in the present application is a parameter related to maximum output power.

In one embodiment, the MPR in the present application is a maximum power reduction.

In one embodiment, the MPR in the present application is the allowed maximum power reduction.

In one embodiment, the MPR in the present application comprises a reduction of maximum output power allowed under different combinations of modulation methods and resource block allocation.

In one embodiment, for the specific definition of the MPR in the present application, see chapter 6.2.2 of TS 38.101-1.

In one embodiment, a determination of the first reference power value is also based on A-MPR (additional maximum power reduction) under the condition of the first waveform.

In one embodiment, the A-MPR in the present application is defined for additional emission requirements.

In one embodiment, for the specific definition of the A-MPR in the present application, see chapter 6.2.3 of TS 38.101-1.

In one embodiment, the first reference power value is a power headroom.

In one embodiment, the first reference power value is a power headroom calculated for a PUSCH transmission.

In one embodiment, the first reference power value is a power headroom calculated for an actual PUSCH transmission.

In one embodiment, the first reference power value is configured maximum output power.

In one embodiment, the first reference power value is a Power Headroom level.

In one embodiment, the first reference power value is a nominal UE transmit power level.

In one embodiment, the first reference power value corresponds to a Power Headroom level.

In one embodiment, the first reference power value corresponds to a nominal UE transmit power level.

In one embodiment, the first reference power value is measured by dB.

In one embodiment, the first reference power value is measured by dBm.

In one embodiment, the first reference power value is measured by mW.

In one embodiment, the expression that "a determination of the first reference power value is based on MPR under a condition of a first waveform" comprises: the first reference power value is not less than a target lower limit power value, and MPR under the condition of the first waveform is used to determine the target lower limit power value.

In one embodiment, the expression that "a determination of the first reference power value is based on MPR under a condition of a first waveform" comprises: target maximum output power is used to determine the first reference power value, and a determination of the target maximum output power is based on the MPR under the condition of the first waveform.

In one embodiment, the expression that "a determination of the first reference power value is based on MPR under a condition of a first waveform" comprises: target maximum output power is used to determine the first reference power value, and the target maximum output power is not less than a target lower limit power value, MPR under the condition of the first waveform is used to determine the target lower limit power value.

In one embodiment, the expression that "the first information indicates a first reference power value" comprises: the first information indicates a power headroom level to which the first reference power value belongs.

In one embodiment, the expression that "the first information indicates a first reference power value" comprises: the first reference power value is a power headroom, and the first information indicates a power headroom level to which the first reference power value belongs.

In one embodiment, the expression that "the first information indicates a first reference power value" comprises: the first information indicates a power level to which the first reference power value belongs.

In one embodiment, the expression that "the first information indicates a first reference power value" comprises: the first reference power value is configured maximum output power, and the first information indicates a power level to which the first reference power value belongs.

In one embodiment, a signal transmitted on the first radio channel is generated using the second waveform.

In one embodiment, the second waveform is used to generate the first radio channel.

In one embodiment, the first radio channel is a radio channel using the second waveform as the transmission architecture.

In one embodiment, a signal generated by a transmitter structure for the second waveform is transmitted in the first radio channel.

In one embodiment, a signal generated based on the second waveform is transmitted in the first radio channel.

In one embodiment, the first waveform is configurable.

In one embodiment, the first waveform is configured by a higher-layer signaling.

In one embodiment, the first waveform is configured by an RRC signaling.

In one embodiment, the first waveform is configured by a MAC CE.

In one embodiment, the second waveform is configurable.

In one embodiment, the second waveform is configured by a higher-layer signaling.

In one embodiment, the second waveform is configured by an RRC signaling.

In one embodiment, the second waveform is configured by a MAC CE.

In one embodiment, the first waveform and the second waveform are two different OFDM (Orthogonal Frequency Division Multiplexing) waveforms, respectively.

In one embodiment, the second waveform is configured as either a DFT-s-OFDM waveform or a CP-OFDM waveform, and the first waveform is the other of a DFT-s-OFDM waveform and a CP-OFDM waveform.

In one embodiment, the expressions that "the first waveform and the second waveform are two different physical layer waveforms" and "a candidate waveform set comprises at least a DFT-s-OFDM waveform and a CP-OFDM waveform, where the first waveform and the second waveform are two different waveforms in the candidate waveform set, respectively" are equivalent or interchangeable.

In one embodiment, a candidate waveform set comprises multiple physical layer waveforms, and both the first waveform and the second waveform belong to the candidate waveform set.

In one embodiment, the candidate waveform set comprises at least one of a DFT-s-OFDM (Discrete Fourier Transform-spread-OFDM) waveform or a CP-OFDM (Cyclic Prefix OFDM) waveform.

In one embodiment, the candidate waveform set only comprises a DFT-s-OFDM waveform and a CP-OFDM waveform.

In one embodiment, the candidate waveform set comprises an FBMC (Filter Bank Multicarrier) waveform.

In one embodiment, the candidate waveform set comprises a UFMC (Universal Filtered Multicarrier) waveform.

In one embodiment, the candidate waveform set comprises an F-OFDM (filtered orthogonal frequency division multiplexing) waveform.

In one embodiment, the expression that "the first waveform and the second waveform are two different physical layer waveforms" and "the first waveform is one of a DFT-s-OFDM waveform or a CP-OFDM waveform, the second waveform is one of a DFT-s-OFDM waveform or a CP-OFDM waveform, and the second waveform is different from the first waveform" are equivalent or interchangeable.

In one embodiment, the first waveform is a DFT-s-OFDM waveform, and the second waveform is a CP-OFDM waveform.

In one embodiment, the second waveform is a DFT-s-OFDM waveform, and the first waveform is a CP-OFDM waveform.

In one embodiment, the DFT-s-OFDM waveform is: a waveform when Transform precoding is enabled.

In one embodiment, the CP-OFDM waveform is: a waveform when Transform precoding is not enabled.

In one embodiment, a CP-OFDM waveform is an OFDM waveform with a cyclic prefix

In one embodiment, the first waveform is a waveform when transformation precoding is enabled, and the second waveform is a waveform when transformation precoding is not enabled; or, the second waveform is a waveform when transformation precoding is enabled, and the first waveform is a waveform when transformation precoding is not enabled.

In one embodiment, the first information belongs to a MAC CE.

Typically, the first reference power value is associated with a first carrier of a first serving cell.

Typically, the first radio channel is in a first slot, and the first reference power value is associated with the first slot.

In one embodiment, the first reference power value is associated to a first BWP of a first carrier of a first serving cell.

In one embodiment, the first slot is for the first carrier of the first serving cell.

In one embodiment, the first slot is for the first BWP of the first carrier of the first serving cell.

In one embodiment, the first radio channel is on a first carrier of a first serving cell.

In one embodiment, the first radio channel is on a first BWP of a first carrier of a first serving cell.

In one embodiment, frequency-domain resources occupied by the first radio channel belong to a first carrier of a first serving cell.

In one embodiment, frequency-domain resources occupied by the first radio channel belong to a first BWP of a first carrier of a first serving cell.

In one embodiment, the first serving cell is a serving cell.

In one embodiment, the first carrier is a carrier.

In one embodiment, the first BWP is a BWP.

In one embodiment, the first slot is a slot.

In one embodiment, the first slot comprises at least one multicarrier symbol.

In one embodiment, the multicarrier symbol in the present application is an Orthogonal Frequency Division Multiplexing (OFDM) symbol.

In one embodiment, the multicarrier symbol in the present application is a Single Carrier- Frequency Division Multiple Access (SC-FDMA) symbol.

In one embodiment, the multicarrier symbol in the present application is a Discrete Fourier Transform Spread OFDM (DFT-S-OFDM) symbol.

In one embodiment, the multicarrier symbol in the present application is a Filter Bank Multicarrier (FBMC) symbol.

In one embodiment, the first reference power value is a transmit power related parameter of the first node on the first carrier of the first serving cell.

In one embodiment, the first reference power value is a transmit power related parameter of the first node on the first BWP of the first carrier of the first serving cell.

In one embodiment, the first reference power value is a parameter related to transmit power of the first node in the first slot.

In one embodiment, the first reference power value is a parameter related to transmit power of the first node in the first slot on the first carrier of the first serving cell.

In one embodiment, the first reference power value is a parameter related to transmit power of the first node in the first slot on the first BWP of the first carrier in the first serving cell.

In one embodiment, the first reference power value is used to determine a power headroom of the first node on the first carrier of the first serving cell.

In one embodiment, the first reference power value is used to determine a power headroom of the first node on the first BWP of the first carrier of the first serving cell.

In one embodiment, the first reference power value is used to determine a power headroom of the first node in a slot on the first carrier of the first serving cell.

In one embodiment, the first reference power value is used to determine a power headroom of the first node in a slot on the first BWP of the first carrier of the first serving cell.

In one embodiment, the first reference power value is a configured maximum output power in a slot on the first carrier of the first serving cell.

In one embodiment, the first reference power value is a power headroom for a PUSCH transmission occasion on the first BWP of the first carrier in the first serving cell.

In one embodiment, a determination of the first reference power value is based on an actual PUSCH transmission.

In one embodiment, the first reference power value is a Type 1 power headroom.

In one embodiment, the MPR under the condition of the first waveform is: MPR for the first waveform obtained through table lookup.

In one embodiment, the MPR under the condition of the first waveform is: MPR for the first waveform obtained by looking up the table.

In one embodiment, the MPR under the condition of the first waveform is: MPR defined for a combination of the first waveform, a modulation method adopted by signal transmission on the first radio channel and resource block allocation information associated with the first radio channel.

### Embodiment 2

Embodiment 2 illustrates a schematic diagram of a network architecture according to the present application, as shown in FIG. 2.

FIG. 2 illustrates a network architecture 200 of 5G NR, Long-Term Evolution (LTE) and Long-Term Evolution Advanced (LTE-A) systems. The NR 5G or LTE network architecture 200 may be called an Evolved Packet System (EPS) 200 or other appropriate terms. The EPS 200 may comprise one or more UEs 201, an NG-RAN 202, an Evolved Packet Core/ 5G-Core Network (EPC/5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will readily understand that various concepts presented throughout the present application can be extended to networks providing circuit switching services or other cellular networks. The NG-RAN 202 comprises an NR node B (gNB) 203 and other gNBs 204. The gNB 203 provides UE 201-oriented user plane and control plane protocol terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of the UE 201 include cellular phones, smart phones, Session Initiation Protocol (SIP) phones, laptop computers, Personal Digital Assistant (PDA), satellite Radios, non-terrestrial base station communications, Satellite Mobile Communications, Global Positioning Systems (GPSs), multimedia devices, video devices, digital audio players (for example, MP3 players), cameras, game consoles, unmanned aerial vehicles (UAV), aircrafts, narrow-band Internet of Things (loT) devices, machine-type communication devices, land vehicles, automobiles, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field (AMF)/ User Plane Function (UPF) 211, other MMEs/ AMFs/ UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212, the S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming Services (PSS).

In one embodiment, the UE 201 corresponds to the first node in the present application.

In one embodiment, the UE 201 corresponds to the second node in the present application.

In one embodiment, the gNB 203 corresponds to the first node in the present application.

In one embodiment, the gNB 203 corresponds to the second node in the present application.

In one embodiment, the UE 201 corresponds to the first node in the present application, and the gNB 203 corresponds to the second node in the present application.

In one embodiment, the gNB 203 is a MarcoCellular base station.

In one embodiment, the gNB 203 is a Micro Cell base station.

In one embodiment, the gNB 203 is a PicoCell base station.

In one embodiment, the gNB 203 is a Femtocell.

In one embodiment, the gNB 203 is a base station that supports large delay differences.

In one embodiment, the gNB 203 is a flight platform.

In one embodiment, the gNB 203 is satellite equipment.

In one embodiment, both the first node and the second node in the present application correspond to the UE 201, for example, V2X communications are performed between the first node and the second node.

### Embodiment 3

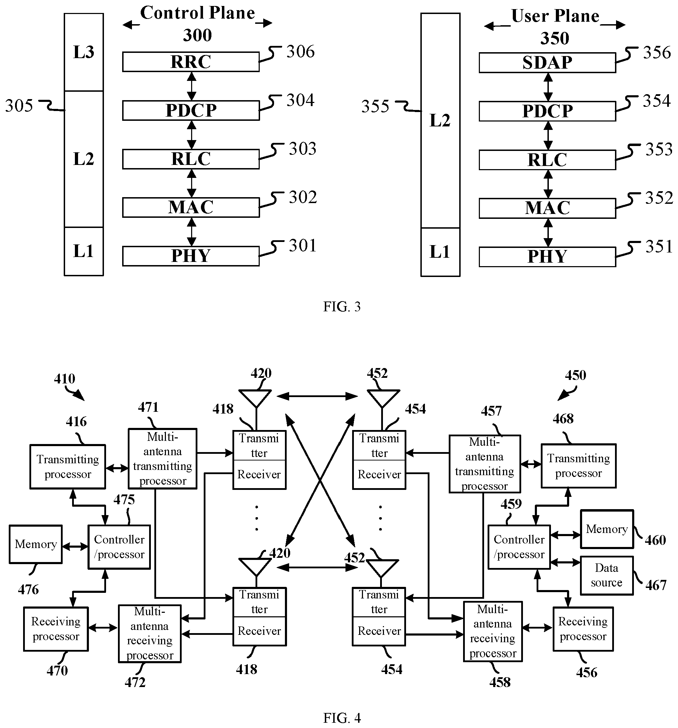

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for a first communication node (UE, gNB or an RSU in V2X) and a second communication node (gNB, UE or an RSU in V2X), or between two UEs is represented by three layers, which are a layer 1, a layer 2 and a layer 3, respectively. The layer 1 (L1) is the lowest layer and performs signal processing functions of various PHY layers. The L1 is called PHY 301 in the present application. The layer 2 (L2) 305 is above the PHY 301, and is in charge of a link between a first communication node and a second communication node, as well as two UEs via the PHY 301. L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication node. The PDCP sublayer 304 provides multiplexing among variable radio bearers and logical channels. The PDCP sublayer 304 provides security by encrypting a packet and provides support for a first communication node handover between second communication nodes. The RLC sublayer 303 provides segmentation and reassembling of a higher-layer packet, retransmission of a lost packet, and reordering of a data packet so as to compensate the disordered receiving caused by HARQ. The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. The Radio Resource Control (RRC) sublayer 306 in layer 3 (L3) of the control plane 300 is responsible for acquiring radio resources (i.e., radio bearer) and configuring the lower layer with an RRC signaling between a second communication node and a first communication node device. The radio protocol architecture of the user plane 350 comprises layer 1 (L1) and layer 2 (L2). In the user plane 350, the radio protocol architecture for the first communication node and the second communication node is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic. Although not described in FIG. 3, the first communication node may comprise several higher layers above the L2 layer 355, such as a network layer (e.g., IP layer) terminated at a P-GW of the network side and an application layer terminated at the other side of the connection (e.g., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first information in the present application is generated by the RRC sublayer 306.

In one embodiment, the first information in the present application is generated by the MAC sublayer 302.

In one embodiment, the first information in the present application is generated by the MAC sublayer 352.

In one embodiment, the first information in the present application is generated by the PHY 301.

In one embodiment, the first information in the present application is generated by the PHY 351.

In one embodiment, the second information in the present application is generated by the RRC sublayer 306.

In one embodiment, the second information in the present application is generated by the MAC sublayer 302.

In one embodiment, the second information in the present application is generated by the MAC sublayer 352.

In one embodiment, the second information in the present application is generated by the PHY 301.

In one embodiment, the second information in the present application is generated by the PHY 351.

In one embodiment, the third information in the present application is generated by the RRC sublayer 306.

In one embodiment, the third information in the present application is generated by the MAC sublayer 302.

In one embodiment, the third information in the present application is generated by the MAC sublayer 352.

In one embodiment, the third information in the present application is generated by the PHY 301.

In one embodiment, the third information in the present application is generated by the PHY351.

In one embodiment, the fourth information in the present application is generated by the RRC sublayer 306.

In one embodiment, the fourth information in the present application is generated by the MAC sublayer 302.

In one embodiment, the fourth information in the present application is generated by the MAC sublayer 352.

In one embodiment, the fourth information in the present application is generated by the PHY 301.

In one embodiment, the fourth information in the present application is generated by the PHY 351.

In one embodiment, the first signaling in the present application is generated by the RRC sublayer 306.

In one embodiment, the first signaling in the present application is generated by the MAC sublayer 302.

In one embodiment, the first signaling in the present application is generated by the MAC sublayer 352.

In one embodiment, the first signaling in the present application is generated by the PHY 301.

In one embodiment, the first signaling in the present application is generated by the PHY 351.

In one embodiment, the second signaling in the present application is generated by the RRC sublayer 306.

In one embodiment, the second signaling in the present application is generated by the MAC sublayer 302.

In one embodiment, the second signaling in the present application is generated by the MAC sublayer 352.

In one embodiment, the second signaling in the present application is generated by the PHY 301.

In one embodiment, the second signaling in the present application is generated by the PHY 351.

### Embodiment 4

Embodiment 4 illustrates a schematic diagram of a first communication device and a second communication device in the present application, as shown in FIG. 4. FIG. 4 is a block diagram of a first communication device 410 in communication with a second communication device 450 in an access network.

The first communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

The second communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from the core network is provided to a controller/ processor 475. The controller/processor 475 provides a function of the L2 layer. In the transmission from the first communication device 410 to the first communication device 450, the controller/ processor 475 provides header compression, encryption, packet segmentation and reordering, and multiplexing between a logical channel and a transport channel, and radio resources allocation to the second communication device 450 based on various priorities. The controller/ processor 475 is also responsible for retransmission of a lost packet and a signaling to the second communication device 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 450, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any the second communication device-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted on the physical channel by the first communication node 410. Next, the higher-layer data and control signal are provided to the controller/processor 459. The controller/processor 459 performs functions of the L2 layer. The controller/processor 459 can be connected to a memory 460 that stores program code and data. The memory 460 can be called a computer readable medium. In the transmission from the first communication device 410 to the second communication device 450, the controller/ processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication device 410 to the second communication device 450, the controller/processor 459 performs header compression, encryption, packet segmentation and reordering, and multiplexing between a logical channel and a transport channel based on radio resources allocation so as to provide the L2 layer functions used for the user plane and the control plane. The controller/processor 459 is also responsible for retransmission of a lost packet, and a signaling to the first communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated spatial streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. In the transmission from the second communication device 450 to the first communication device 410, the controller/processor 475 provides de-multiplexing between a transport channel and a logical channel, packet reassembling, decryption, header decompression, control signal processing so as to recover a higher-layer packet from the UE 450. The higher-layer packet coming from the controller/processor 475 may be provided to the core network.

In one embodiment, the first node in the present application comprises the second communication device 450, and the second node in the present application comprises the first communication device 410.

In one subembodiment of the above embodiment, the first node is a UE, and the second node is a UE.

In one subembodiment of the above embodiment, the first node is a UE, and the second node is a relay node.

In one subembodiment of the above embodiment, the first node is a relay node, and the second node is a UE.

In one subembodiment of the above embodiment, the first node is a UE, and the second node is a base station.

In one subembodiment of the above embodiment, the first node is a relay node, and the second node is a base station.

In one subembodiment of the above embodiment, the second node is a UE, and the first node is a base station.

In one subembodiment of the above embodiment, the second node is a relay node, and the first node is a base station.

In one subembodiment of the above embodiment, the second communication device 450 comprises: at least one controller/ processor; the at least one controller/ processor is responsible for HARQ operation.

In one subembodiment of the above embodiment, the first communication device 410 comprises: at least one controller/ processor; the at least one controller/ processor is responsible for HARQ operation.

In one subembodiment of the above embodiment, the first communication device 410 comprises: at least one controller/ processor; the at least one controller/ processor is responsible for error detection using ACK and/ or NACK protocols as a way to support HARQ operation.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: transmits first information on a first radio channel, the first information indicates a first reference power value; herein, a determination of the first reference power value is based on MPR under a condition of a first waveform, and the first radio channel adopts a second waveform; the first waveform and the second waveform are two different physical layer waveforms.

In one subembodiment of the above embodiment, the second communication device 450 corresponds to the first node in the present application.

In one embodiment, the second communication device 450 comprises a memory that stores a computer readable instruction program. The computer readable instruction program generates an action when executed by at least one processor. The action includes: transmitting first information on a first radio channel, the first information indicating a first reference power value; herein, a determination of the first reference power value is based on MPR under a condition of a first waveform, and the first radio channel adopts a second waveform; the first waveform and the second waveform are two different physical layer waveforms.

In one subembodiment of the above embodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: receives first information on a first radio channel, the first information indicates a first reference power value; herein, a determination of the first reference power value is based on MPR under a condition of a first waveform, and the first radio channel adopts a second waveform; the first waveform and the second waveform are two different physical layer waveforms.

In one subembodiment of the above embodiment, the first communication device 410 corresponds to the second node in the present application.

In one embodiment, the first communication device 410 comprises a memory that stores a computer readable instruction program. The computer readable instruction program generates an action when executed by at least one processor. The action includes: receiving first information on a first radio channel, the first information indicating a first reference power value; herein, a determination of the first reference power value is based on MPR under a condition of a first waveform, and the first radio channel adopts a second waveform; the first waveform and the second waveform are two different physical layer waveforms.

In one subembodiment of the above embodiment, the first communication device 410 corresponds to the second node in the present application.

In one embodiment, at least one of the antenna 452, the transmitter 454, the multi-antenna transmitting processor 458, the transmitting processer 468, the controller/processor 459, the memory 460 or the data source 467 is used to transmit the first information in the present application.

In one embodiment, at least one of the antenna 420, the receiver 418, the multi-antenna receiving processor 472, the receiving processor 470, the controller/processor 475, or the memory 476 is used to receive the first information in the present application.

In one embodiment, at least one of the antenna 452, the transmitter 454, the multi-antenna transmitting processor 458, the transmitting processor 468, the controller/processor 459, the memory 460, or the data sources 467 is used to transmit the second information in the present application.

In one embodiment, at least one of the antenna 420, the receiver 418, the multi-antenna receiving processor 472, the receiving processor 470, the controller/ processor 475, or the memory 476 is used to receive the second information in the present application.

In one embodiment, at least one of the antenna 452, the transmitter 454, the multi-antenna transmitting processor 458, the transmitting processor 468, the controller/ processor 459, the memory 460 or the data source 467 is used to transmit the third information in the present application.

In one embodiment, at least one of the antenna 420, the receiver 418, the multi-antenna receiving processor 472, the receiving processor 470, the controller/processor 475, or the memory 476 is used to receive the third information in the present application.

In one embodiment, at least one of the antenna 452, the transmitter 454, the multi-antenna transmitting processor 458, the transmitting processor 468, the controller/processor 459, the memory 460, or the data sources 467 is used to transmit the fourth information in the present application.

In one embodiment, at least one of the antenna 420, the receiver 418, the multi-antenna receiving processor 472, the receiving processor 470, the controller/ processor 475, or the memory 476 is used to receive the fourth information in the present application.

In one embodiment, at least one of the antenna 452, the receiver 454, the multi-antenna receiving processor 458, the receiving processor 456, the controller / processor 459, the memory 460, or the data source 467 is used to receive the first signaling in the present application.

In one embodiment, at least one of the antenna 420, the transmitter 418, the multi-antenna transmitting processor 471, the transmitting processor 416, the controller/ processor 475, or the memory 476 is used to transmit the first signaling in the present application.

In one embodiment, at least one of the antenna 452, the receiver 454, the multi-antenna receiving processor 458, the receiving processor 456, the controller / processor 459, the memory 460, or the data source 467 is used to receive the second signaling in the present application.

In one embodiment, at least one of the antenna 420, the transmitter 418, the multi-antenna transmitting processor 471, the transmitting processor 416, the controller/ processor 475, or the memory 476 is used to transmit the second signaling in the present application.

### Embodiment 5

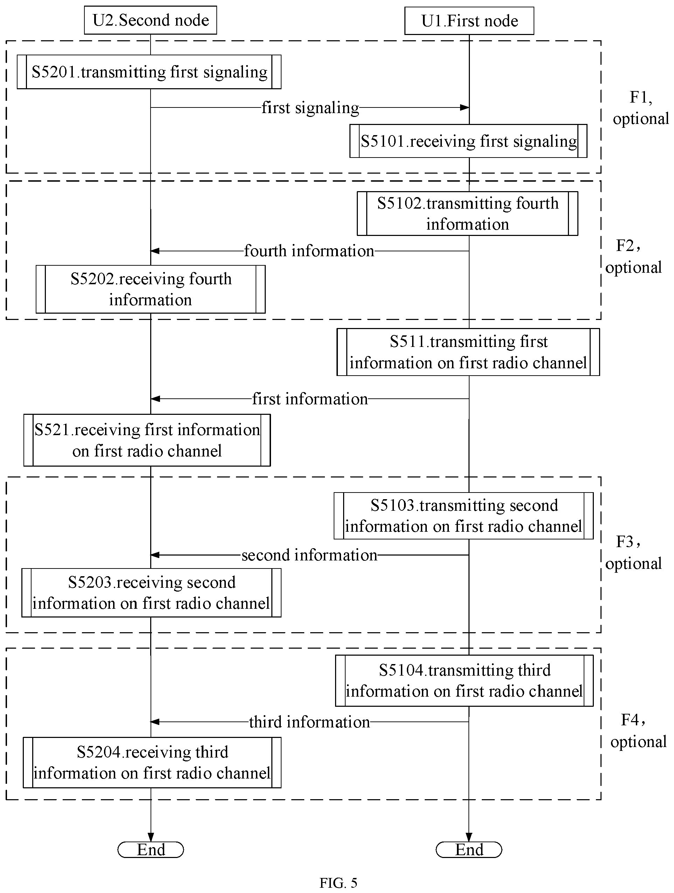

Embodiment 5 illustrates a flowchart of signal transmission according to one embodiment in the present application, as shown in FIG. 5. In FIG. 5, a first node U1 and a second node U2 are in communications via an air interface. In FIG. 5, part in the dashed boxes F1, F2, F3 and F4 are optional. In particular, the sequence between the individual steps in FIG. 5 does not represent a particular chronological order.

The first node U1 receives a first signaling in step S5101; transmits fourth information in step S5102; transmits first information on a first radio channel in step S511; transmits second information on a first radio channel in step S5103; transmits third information on a first radio channel in step S5104.

The second node U2 transmits a first signaling in step S5201; receives fourth information in step S5202; receives first information on a first radio channel in step S521; receives second information on a first radio channel in step S5203; receives third information on a first radio channel in step S5204.

In embodiment 5, the first information indicates a first reference power value; a determination of the first reference power value is based on MPR under a condition of a first waveform, and the first radio channel adopts a second waveform; the first waveform and the second waveform are two different physical layer waveforms; the second information indicates at least a former of a first power headroom and first maximum output power; the first maximum output power is used to determine the first power headroom, and a determination of the first maximum output power is based on MPR under the second waveform condition; the third information indicates target maximum output power; the target maximum output power is used to determine the first reference power value, and a determination of the target maximum output power is based on the MPR under the condition of the first waveform.

In one subembodiment of embodiment 5, the fourth information is used to indicate whether a determination of the first reference power value is based on MPR under the condition of the first waveform or MPR under the second waveform condition.

In one subembodiment of embodiment 5, at least a first condition is used to determine whether a calculation of the first reference power value is based on MPR under the condition of the first waveform or MPR under the second waveform condition; the first condition comprises: whether a power headroom calculated based on MPR under the second waveform condition is greater than or not less than a first threshold.

In one subembodiment of embodiment 5, the first signaling is used to indicate whether a calculation of the first reference power value is based on MPR under the condition of the first waveform or MPR under the second waveform condition.

In one subembodiment of embodiment 5, the first reference power value is associated with a first carrier of a first serving cell; at least a second condition is used to determine whether a determination of the first reference power value is based on MPR under the condition of the first waveform or MPR under the second waveform condition; the second condition comprises: a power headroom of the first carrier of the first serving cell reported for the most recent consecutive K2 times is not calculated based on MPR under the condition of the first waveform, or, a power headroom of the first carrier of the reported first serving cell is not calculated based on MPR under the condition of the first waveform.

In one embodiment, the first node U1 is the first node in the present application.

In one embodiment, the second node U2 is the second node in the present application.

In one embodiment, the first node U1 is a UE.

In one embodiment, the first node U1 is a base station.

In one embodiment, the second node U2 is a base station.

In one embodiment, the second node U2 is a UE.

In one embodiment, an air interface between the second node U2 and the first node U1 is a Uu interface.

In one embodiment, an air interface between the second node U2 and the first node U1 comprises a cellular link.

In one embodiment, an air interface between the second node U2 and the first node U1 is a PCS interface.

In one embodiment, an air interface between the second node U2 and the first node U1 comprises sidelink.

In one embodiment, an air interface between the second node U2 and the first node U1 comprises a radio interface between a base station and a UE.

In one embodiment, an air interface between the second node U2 and the first node U1 comprises a radio interface between a satellite and a UE.

In one embodiment, an air interface between the second node U2 and the first node U1 comprises a radio interface between a UE and a UE.

In one embodiment, for the first node U1, a reception of the first signaling is earlier than a transmission of the first information.

In one embodiment, for the first node U1, a transmission of the fourth information is earlier than a transmission of the first information.

In one embodiment, for the first node U1, a transmission of the fourth information is later than a transmission of the first information.

In one embodiment, for the first node U1, the fourth information is transmitted simultaneously with the first information.

In one embodiment, for the first node U1, a transmission of the second information is earlier than a transmission of the first information.

In one embodiment, for the first node U1, a transmission of the second information is later than a transmission of the first information.

In one embodiment, for the first node U1, the second information is transmitted simultaneously with the first information.

In one embodiment, for the first node U1, a transmission of the third information is earlier than a transmission of the first information.

In one embodiment, for the first node U1, a transmission of the third information is later than a transmission of the first information.

In one embodiment, for the first node U1, the third information is transmitted simultaneously with the first information.

In one embodiment, for the first node U1, a transmission of the fourth information is earlier than a transmission of the second information.

In one embodiment, for the first node U1, a transmission of the fourth information is later than a transmission of the second information.

In one embodiment, for the first node U1, the fourth information is transmitted simultaneously with the second information.

In one embodiment, for the first node U1, a transmission of the fourth information is earlier than a transmission of the third information.

In one embodiment, for the first node U1, a transmission of the fourth information is later than a transmission of the third information.

In one embodiment, for the first node U1, the fourth information is transmitted simultaneously with the third information.

In one embodiment, for the first node U1, a transmission of the second information is earlier than a transmission of the third information.

In one embodiment, for the first node U1, a transmission of the second information is later than a transmission of the third information.

In one embodiment, for the first node U1, the second information is transmitted simultaneously with the third information.

In one embodiment, for the second node U2, a transmission of the first signaling is earlier than a reception of the first information.

In one embodiment, for the second node U2, a reception of the fourth information is earlier than a reception of the first information.

In one embodiment, for the second node U2, a reception of the fourth information is later than a reception of the first information.

In one embodiment, for the second node U2, the fourth information is received simultaneously with the first information.

In one embodiment, for the second node U2, a reception of the second information is earlier than a reception of the first information.

In one embodiment, for the second node U2, a reception of the second information is later than a reception of the first information.

In one embodiment, for the second node U2, the second information is received simultaneously with the first information.

In one embodiment, for the second node U2, a reception of the third information is earlier than a reception of the first information.

In one embodiment, for the second node U2, a reception of the third information is later than a reception of the first information.

In one embodiment, for the second node U2, the third information is received simultaneously with the first information.

In one embodiment, for the second node U2, a reception of the fourth information is earlier than a reception of the second information.

In one embodiment, for the second node U2, a reception of the fourth information is later than a reception of the second information.

In one embodiment, for the second node U2, the fourth information is received simultaneously with the second information.

In one embodiment, for the second node U2, a reception of the fourth information is earlier than a reception of the third information.

In one embodiment, for the second node U2, a reception of the fourth information is later than a reception of the third information.

In one embodiment, for the second node U2, the fourth information is received simultaneously with the third information.

In one embodiment, for the second node U2, a reception of the second information is earlier than a reception of the third information.

In one embodiment, for the second node U2, a reception of the second information is later than a reception of the third information.

In one embodiment, for the second node U2, the second information is received simultaneously with the third information.

In one embodiment, in FIG. 5, there exists at most one of steps in dashed box F1 and steps in dashed box F2.

In one embodiment, steps in dashed box F1 in FIG. 5 exist.

In one embodiment, steps in dashed box F1 in FIG. 5 do not exist.

In one embodiment, steps in dashed box F2 in FIG. 5 exist.

In one embodiment, steps in dashed box F2 in FIG. 5 do not exist.

In one embodiment, steps in dashed box F3 in FIG. 5 exist.

In one embodiment, steps in dashed box F3 in FIG. 5 do not exist.

In one embodiment, steps in dashed box F4 in FIG. 5 exist.

In one embodiment, steps in dashed box F4 in FIG. 5 do not exist.

In one embodiment, the benefits of the disclosed scheme in the present application include: decoupling a waveform corresponding to a power headroom or maximum output power to be reported from a waveform adopted by the first radio channel enhances the flexibility of scheduling as well as decision making at the base station side.

In one embodiment, a problem to be solved in the present application comprises: how to enhance the reporting of power headroom related information in 5G NR systems to support dynamic waveform switching.

In one embodiment, a problem to be solved in the present application comprises: how to enhance the reporting of maximum output power-related information in 5G NR systems to support dynamic waveform switching.

In one embodiment, a problem to be solved in the present application comprises: how to achieve more flexibility in reporting power-related information for specific physical layer waveforms.

In one embodiment, a problem to be solved in the present application comprises: how to more effectively provide power-related information of different physical layer waveforms to the base station for scheduling decisions.

In one embodiment, a problem to be solved in the present application comprises: how to achieve a more efficient exchange of power-related information between communicating parties for different physical layer waveforms.

In one embodiment, the first reference power value is used to determine an offset between maximum output power calculated under the condition of the first waveform and the first maximum output power.

In one embodiment, the first reference power value is used to determine an offset of a power headroom calculated under the condition of the first waveform compared to the first power headroom.

In one embodiment, the first information indicates a target offset.

In one embodiment, an indication of the first reference power value by the first information is achieved through the target offset.

In one embodiment, the second information indicates the target offset.

In one embodiment, an indication of the first power headroom by the second information is achieved through the target offset.

In one embodiment, an indication of the first maximum output power by the second information is achieved through the target offset.

In one embodiment, the target offset is specific to power headroom level.

In one embodiment, the target offset is specific to power level.

In one embodiment, the target offset is for a nominal UE transmit power level.

In one embodiment, the target offset is for a value of power headroom.

In one embodiment, the target offset is specific to a power value.

In one embodiment, the target offset is an offset between the first reference power value compared to the first power headroom.

In one embodiment, the target offset is the offset between the first reference power value compared to the first maximum output power.

In one embodiment, the target offset is an offset between the first power headroom compared to the first reference power value.

In one embodiment, the target offset is an offset between the first maximum output power compared to the first reference power value.

In one embodiment, the target offset is an offset of a power headroom level to which the first reference power value belongs compared to a power headroom level to which the first power headroom belongs.

In one embodiment, the target offset is an offset of a power level to which the first reference power value belongs compared to a power level to which the first maximum output power belongs.

In one embodiment, the target offset is an offset of a power headroom level to which the first power headroom belongs compared to a power headroom level to which the first reference power value belongs.

In one embodiment, the target offset is an offset of a power level to which the first maximum output power belongs compared to a power level to which the first reference power value belongs.

In one embodiment, the target offset represents a difference value between the first reference power value compared to the first power headroom.

In one embodiment, the target offset represents a difference value between the first reference power value compared to the first maximum output power.

In one embodiment, the target offset represents a difference value between the first power headroom compared to the first reference power value.

In one embodiment, the target offset represents a difference value between the first maximum output power compared to the first reference power value.

### Embodiment 6

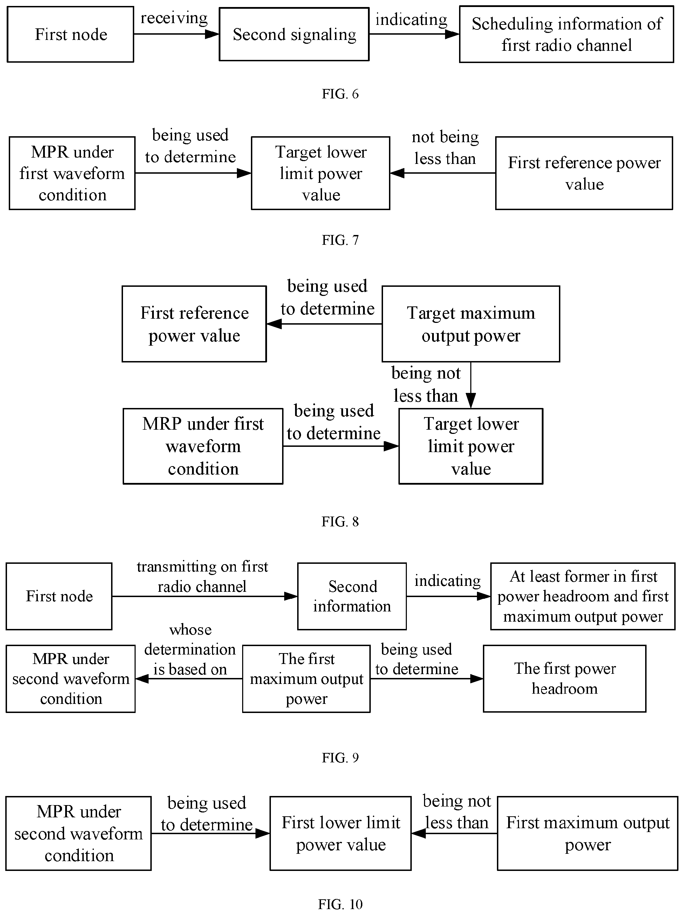

Embodiment 6 illustrate a schematic diagram of relations among a first node, a second signaling and a first radio channel according to one embodiment of the present application, as shown in FIG. 6.

In embodiment 6, the first node in the application receives a second signaling, and the second signaling indicates scheduling information of the first radio channel.

In one embodiment, the scheduling information comprises at least one of time-domain resources occupied, frequency-domain resources occupied, antenna ports used, MCS (Modulation and coding scheme) adopted, RV (redundancy version) adopted, precoding adopted, or corresponding priority.

In one embodiment, the second signaling is the first signaling in the present application.

In one embodiment, the second signaling is not the first signaling in the present application.

In one embodiment, the second signaling comprises a physical layer signaling.

In one embodiment, the second signaling is a Downlink control information (DCI) format.

In one embodiment, the second signaling is DCI format 0_0, and for the specific meaning of the DCI format 0_0, refer to 3GPP TS38.212, chapter 7.3.1.1.

In one embodiment, the second signaling is DCI format 0_1, and for the specific meaning of the DCI format 0_1, refer to 3GPP TS38.212, chapter 7.3.1.1.

In one embodiment, the second signaling is DCI format 0_2, and for the specific meaning of the DCI format 0_2, refer to 3GPP TS38.212, chapter 7.3.1.1.

In one embodiment, the second signaling comprises one or multiple fields in a DCI format.

In one embodiment, the second signaling is a higher-layer signaling.

In one embodiment, the second signaling is an RRC signaling.

In one embodiment, the second signaling comprises one or multiple fields in an RRC signaling.

In one embodiment, the second signaling comprises an IE.

In one embodiment, the second signaling comprises one or multiple fields in an IE.

In one embodiment, the second signaling is a MAC CE (Medium Access Control layer Control Element) signaling.

In one embodiment, the second signaling comprises one or multiple fields in a MAC CE signaling.

In one embodiment, the second signaling is an UpLink Grant Signaling.

### Embodiment 7

Embodiment 7 illustrates a schematic diagram of relations among MPR under a condition of a first waveform, a target lower limit power value, and a first reference power value according to one embodiment of the present application, as shown in FIG. 7.

In embodiment 7, the first reference power value is not less than a target lower limit power value, and MPR under the condition of the first waveform is used to determine the target lower limit power value.

In one embodiment, the first reference power value is set to not exceed a target upper limit power value and not less than a target lower limit power value.

In one embodiment, the MPR under the condition of the first waveform is used to calculate the target lower limit power value.

In one embodiment, under the condition that the first reference power value is not greater than the target upper limit power value and not less than the target lower limit power value, the first node sets the first reference power value on its own.

In one embodiment, the target lower limit power value is configurable.

In one embodiment, the target upper limit power value is configurable.

In one embodiment, the target lower power limit value is denoted by P_{CMAX_L,f,c}, and the P_{CMAX_L,f,c} = MIN {P_{EMAX,c}- Δ_{TC,c}, (P_{PowerClass} - ΔP _{PowerClass} ) - MAX(MAX(MPR_{c} + Δ MPR_{c} , A-MPR_{c} )+ ΔT_{IB,c} + ΔT_{C,c} + ΔT_{RxSRS}, P-MPR_{c})}.

In one embodiment, the target lower power limit value is denoted by P_{CMAX_L,f,c}, and the P_{CMAX_L,f,c} = MIN {P_{EMAX,c}- ΔT_{C,c}, (P_{PowerClass} - ΔP_{PowerClass}) - MAX(MAX(MPR_{c} + Δ MPR_{c}, A-MPR_{c} )+ ΔT_{IB,c} + Δ T_{C,c}, P-MPR_{c})}.

In one embodiment, the target upper limit power value is represented by P_{CMAX_H,f,c}, and the P_{CMAX_H,f,c} = MIN {P_{EMAX,c}, P_{PowerClass} - ΔP_{PowerClass}}.

In one embodiment, the MIN represents taking a smaller one of the two.

In one embodiment, the MAX represents taking a larger one of the two.

In one embodiment, the P_{EMAX,c} is configurable.

In one embodiment, the P_{EMAX,c} is configured by an RRC signaling.

In one embodiment, the P_{EMAX,c} is a value indicated by an *additionalPmax* field in an information element *p-Max* or an information element *NR-NS-PmaxList.*

In one embodiment, the P_{PowerClass} is equal to 23dBm.

In one embodiment, the P_{PowerClass} is equal to 26dBm.

In one embodiment, the P_{PowerClass} is equal to 29dBm.

In one embodiment, the P_{PowerClass} is equal to 31dBm.

In one embodiment, the P_{PowerClass} is a maximum UE power without considering tolerance.

In one embodiment, the Δ P_{PowerClass} is configurable.

In one embodiment, the Δ P_{PowerClass} is equal to -3dB.

In one embodiment, the Δ P_{PowerClass} is equal to 3dB.

In one embodiment, the Δ P_{PowerClass} is equal to 0dB.

In one embodiment, the ΔT_{C,c} is configurable.

In one embodiment, the ΔT_{C,c} is equal to 0dB.

In one embodiment, the ΔT_{C,c} is equal to 1.5dB.

In one embodiment, the ΔT_{IB,c} is configurable.

In one embodiment, the ΔT_{IB,c} is an additional tolerance for the first serving cell.

In one embodiment, the ΔT_{IB,c} is equal to 0dB.

In one embodiment, the MPR_{c} is the MPR for the condition of the first waveform.

In one embodiment, the A-MPR_{c} is A-MPR for the condition of the first waveform.

In one embodiment, the MPR_{c} is for the first serving cell.

In one embodiment, the A-MPR_{c} is for the first serving cell.

In one embodiment, the ΔMPR_{c} is for the first serving cell.

In one embodiment, the ΔMPR_{c} is equal to 0.

In one embodiment, a value of the ΔMPR_{c} is related to a relative channel bandwidth.

In one embodiment, the ΔT_{RxSRS} is equal to 0.

In one embodiment, the ΔT_{RxSRS} is equal to 4.5dB.

In one embodiment, the ΔT_{RxSRS} is equal to 7.5dB.

In one embodiment, the P-MPR_{c} is power management maximum power reduction.

In one embodiment, the P-MPR_{c} is equal to 0dB.

In one embodiment, the P-MPR_{c} is configurable.

In one embodiment, the first node reports the P-MPR_{c}.

### Embodiment 8

Embodiment 8 illustrates a schematic diagram of relations among MPR under a condition of a first waveform, a target lower limit power value, target maximum output power and a first reference power value according to one embodiment of the present application, as shown in FIG. 8.

In embodiment 8, target maximum output power is used to determine the first reference power value, and the target maximum output power is not less than a target lower limit power value, MPR under the condition of the first waveform is used to determine the target lower limit power value.

In one embodiment, target maximum output power is used to determine the first reference power value, and a determination of the target maximum output power is based on the MPR under the condition of the first waveform.

In one embodiment, the target maximum output power is configured maximum output power.

In one embodiment, the target maximum output power is set to not exceed a target upper limit power value and not less than a target lower limit power value.

In one embodiment, under the condition that the target maximum output power is not greater than the target upper limit power value and not less than the target lower limit power value, the first node sets the target maximum output power on its own.

In one embodiment, the target maximum output power is a configured maximum output power of the first node in a slot on the first carrier of the first serving cell.

In one embodiment, the target maximum output power is measured in dBm.

In one embodiment, the target maximum output power is measured in mW.

In one embodiment, a same MAC CE comprises the first information and indicates the target maximum output power as well.

In one embodiment, the target maximum output power is used to calculate the first reference power value.

In one embodiment, the first reference power value is linearly related to the target maximum output power.

In one embodiment, the first reference power value is linearly related to the target maximum output power in dB field.

In one embodiment, the first reference power value is equal to the target maximum output power minus a first intermediate value, and relevant information of the first radio channel is used to determine the first intermediate value.

In one embodiment, the first reference power value is a power headroom level to which a difference value of the target maximum output power minus a first intermediate value belongs, and relevant information of the first radio channel is used to determine the first intermediate value.

In one embodiment, the first reference power value is a power level to which the target maximum output power belongs.

In one embodiment, the first reference power value is a nominal UE transmit power level to which the target maximum output power belongs.

In one embodiment, a channel bandwidth occupied by the first radio channel is used to determine the first intermediate value.

In one embodiment, a BPRE (Bits per resource element) for signal transmission on the first radio channel is used to determine the first intermediate value.

In one embodiment, the first intermediate value is equal to a sum of multiple components.

In one embodiment, relevant information of the first radio channel is used to determine at least one of the multiple components

In one embodiment, at least one of the multiple components is configurable.

In one embodiment, at least one of the multiple components is configured by a higher-layer signaling.

In one embodiment, at least one of the multiple components is configured by an RRC signaling.

In one embodiment, one of the multiple components is measured by dB or dBm.

In one embodiment, one of the multiple components is equal to 10log₁₀(2^{µ}·M), M is a channel bandwidth occupied by the first radio channel, and the µ is an SCS (Subcarrier spacing) configuration.

In one embodiment, one of the multiple components is equal to α · PL, where α is a configurable parameter value and PL is a downlink path loss estimate.

In one embodiment, one of the multiple components is equal to 10log₁₀((2^{B·KS}· - 1)·β, where KS and β are configurable parameter values, and B represents a BPRE for signal transmission on the first radio channel.

In one embodiment, one of the multiple components is a PUSCH power control adjustment state.

In one embodiment, one of the multiple components is indicated by a TPC command.

### Embodiment 9

Embodiment 9 illustrates a schematic diagram of relations among a first node, second information, MPR under a second waveform condition, first maximum output power, and a first power headroom according to one embodiment of the present application, as shown in FIG. 9.

In embodiment 9, the first node in the present application transmits second information on the first radio channel, the second information indicates at least a former of a first power headroom and first maximum output power; herein, the first maximum output power is used to determine the first power headroom, and a determination of the first maximum output power is based on MPR under the second waveform condition.

In one embodiment, the first radio channel is used to carry the second information.

In one embodiment, bits in at least the second information are transmitted on the first radio channel after undergoing at least part of CRC attachment, code block segmentation, code block CRC attachment, channel coding, rate matching, code block concatenation, scrambling, modulation, layer mapping, transform precoding, precoding, resource block mapping, multicarrier symbol generation, and modulation and upconversion.

In one embodiment, bits in at least the second information is transmitted on the first radio channel after undergoing at least part of CRC attachment, Code block segmentation, Code block CRC attachment, Channel coding, Rate matching, Code block concatenation, Scrambling, Modulation, Layer mapping, Transform precoding, Precoding, Mapping to virtual resource blocks and Mapping from virtual to physical resource blocks.

In one embodiment, a TB bearing bits in at least the second information is transmitted on the first radio channel.

In one embodiment, a TB comprising bits in the second information is transmitted on the first radio channel after at least channel coding.

In one embodiment, a TB bearing bits in at least the first information and bits in the second information is transmitted on the first radio channel.

In one embodiment, a TB comprising bits in the first information and bits in the second information is transmitted on the first radio channel after at least channel coding.

In one embodiment, a transmission of the second information occupies the first radio channel.

In one embodiment, the second information comprises at least one bit.

In one embodiment, the second information consists of 6 bits.

In one embodiment, the second information consists of up to 8 bits.

In one embodiment, the second information consists of up to 16 bits.

In one embodiment, the second information is represented by at least one bit.

In one embodiment, the second information is represented by 6 bits.

In one embodiment, the second information is represented by up to 8 bits.

In one embodiment, the second information is represented by up to 16 bits.

In one embodiment, the second information is a physical-layer signaling.

In one embodiment, the second information is DCI (Downlink control information) format.

In one embodiment, the second information is one of DCI format 0_0, DCI format 0_1, or DCI format 0_2.

In one embodiment, the second information is DCI format 0_0, and for the specific meaning of the DCI format 0_0, refer to chapter 7.3.1.1 in 3GPP TS38.212.

In one embodiment, the second information is DCI format 0_1, and for the specific meaning of the DCI format 0_1, refer to chapter 7.3.1.1 in 3GPP TS38.212.

In one embodiment, the second information is DCI format 0_2, and for the specific meaning of the DCI format 0_2, refer to chapter 7.3.1.1 in 3GPP TS38.212.

In one embodiment, the second information is one of DCI format 1_0, DCI format 1_1 or DCI format 1_2.

In one embodiment, the second information is DCI format 1_0, and for the specific meaning of the DCI format 1_0, refer to chapter 7.3.1.2 in 3GPP TS38.212.

In one embodiment, the second information is DCI format 1_1, and for the specific meaning of the DCI format 1_1, refer to chapter 7.3.1.2 in 3GPP TS38.212.

In one embodiment, the second information is DCI format 1_2, and for the specific meaning of the DCI format 1_2, refer to chapter 7.3.1.2 in 3GPP TS38.212.

In one embodiment, the second information comprises one or multiple fields in a DCI format.

In one embodiment, the second information is an uplink grant signaling.

In one embodiment, the second information is a higher-layer signaling.

In one embodiment, the second information is an RRC signaling.

In one embodiment, the second information comprises one or multiple fields in an RRC signaling.

In one embodiment, the second information comprises an IE.

In one embodiment, the second information comprises one or multiple fields in an IE.

In one embodiment, the second information is a Medium Access Control layer Control Element (MAC CE).

In one embodiment, the second information comprises one or multiple fields in a MAC CE.

In one embodiment, the second information belongs to a MAC CE.

In one embodiment, the second information belongs to a MAC CE related to a PHR (Power headroom report).

Typically, the first information and the second information belong to a same MAC CE.

In one embodiment, the first information and the second information both belong to a same Single Entry PHR MAC CE.

In one embodiment, the first information and the second information both belong to a same Multiple Entry PHR MAC CE.

In one embodiment, the first information and the second information both belong to a same MAC CE identified by a MAC subheader with a value of 54 in an LCID field.

In one embodiment, the first information and the second information both belong to a same MAC CE identified by a MAC subheader with a value of 56 in an LCID field.

In one embodiment, the first information and the second information both belong to a same MAC CE identified by a MAC subheader with a value of 57 in an LCID field.

In one embodiment, a value of an LCID field corresponding to a MAC CE to which the first information and the second information belong is not equal to either 54, 56, or 57.

In one embodiment, the first information and the second information belong to different MAC CEs, respectively.

In one embodiment, based on RRC signaling configuration, a positive integer number of bit(s) in a target MAC CE is(are) used to represent the first information or indicate first maximum output power, and a determination of the first maximum output power is based on the MPR under the second waveform condition.

In one subembodiment of the above embodiment, only when an RRC signaling configures the positive integer number of bit(s) in the target MAC CE is used to represent the first information: the first information is transmitted on the first radio channel, and the first information indicates the first reference power value.

In one embodiment, the target MAC CE is a Single Entry PHR MAC CE.

In one embodiment, the target MAC CE is a Multiple Entry PHR MAC CE.

In one embodiment, the target MAC CE is a MAC CE identified by a MAC subheader with a value of 54 in an LCID field.

In one embodiment, the target MAC CE is a MAC CE identified by a MAC subheader with a value of 56 in an LCID field.

In one embodiment, the target MAC CE is a MAC CE identified by a MAC subheader with a value of 57 in an LCID field.

In one embodiment, based on RRC signaling configuration, the first information is used to indicate the first reference power value or the first maximum output power, and a determination of the first maximum output power is based on MPR under the second waveform condition.

In one subembodiment of the above embodiment, only when the RRC signaling configures the first information is used to indicate the first reference power value: the first information indicates the first reference power value.

Typically, the first power headroom is for the first radio channel.

In one embodiment, a determination of a first power headroom is based on MPR under the second waveform condition.

In one embodiment, a determination of first maximum output power is based on MPR under the second waveform condition.

In one embodiment, a calculation of a first power headroom is based on MPR under the second waveform condition.

In one embodiment, a calculation of first maximum output power is based on MPR under the second waveform condition.

In one embodiment, the first maximum output power is used to calculate the first power headroom.

In one embodiment, the second information indicates the first power headroom.

In one embodiment, the second information explicitly indicates the first power headroom.

In one embodiment, the second information implicitly indicates the first power headroom.

In one embodiment, the first power headroom is a Power Headroom.

In one embodiment, the first power headroom is a power headroom calculated for a PUSCH transmission.

In one embodiment, the first power headroom is a Power Headroom level.

In one embodiment, the first power headroom corresponds to a Power Headroom level.

In one embodiment, the first power headroom is measured by dB.

In one embodiment, the first maximum output power is configured maximum output power.

In one embodiment, the first maximum output power corresponds to a Nominal UE transmit power level.

In one embodiment, the first maximum output power is measured in dBm.

In one embodiment, the first maximum output power is measured in mW.

In one embodiment, the expression that "a determination of the first maximum output power is based on MPR under the second waveform condition" comprises: the first maximum output power is not less than a first lower limit power value, and MPR under the second waveform condition is used to determine the first lower limit power value.

In one embodiment, the first maximum output power is used to determine the first power headroom, the first maximum output power is not less than a first lower limit power value, and the MPR under the second waveform condition is used to determine the first lower limit power value.

In one embodiment, the first maximum output power is configured maximum output power.

In one embodiment, the first power headroom is linearly related to the first maximum output power.

In one embodiment, the first power headroom is linearly related to the first maximum output power in dB field.

In one embodiment, the expression that "the second information indicates at least a former of a first power headroom and first maximum output power" comprises: the second information indicates a power headroom level to which the first power headroom belongs.

In one embodiment, the second information indicates a power level to which the first maximum output power belongs.

In one embodiment, the first power headroom is equal to the first maximum output power minus a second intermediate value, and relevant information of the first radio channel is used to determine the second intermediate value.

In one embodiment, the first power headroom is a power headroom level to which a difference value of the first maximum output power minus the second intermediate value belongs, and relevant information of the first radio channel is used to determine the second intermediate value.

In one embodiment, the second intermediate value is the first intermediate value.

In one embodiment, the second intermediate value is not the first intermediate value.

In one embodiment, the second intermediate value is equal to the first intermediate value.

In one embodiment, the second intermediate value is not equal to the first intermediate value.

In one embodiment, a channel bandwidth occupied by the first radio channel is used to determine the second intermediate value.

In one embodiment, a BPRE (Bits per resource element) for signal transmission on the first radio channel is used to determine the second intermediate value.

In one embodiment, the second intermediate value is equal to a sum of multiple components.

In one embodiment, relevant information of the first radio channel is used to determine at least one of the multiple components

In one embodiment, at least one of the multiple components is configurable.

In one embodiment, at least one of the multiple components is configured by a higher-layer signaling.

In one embodiment, at least one of the multiple components is configured by an RRC signaling.

In one embodiment, one of the multiple components is measured by dB or dBm.

In one embodiment, one of the multiple components is equal to 10log₁₀(2^{µ}·M), M is a channel bandwidth occupied by the first radio channel, and the µ is an SCS configuration.

In one embodiment, one of the multiple components is equal to α · PL, where α is a configurable parameter value and PL is a downlink path loss estimate.

In one embodiment, one of the multiple components is equal to 10log₁₀((2^{B·KS}·-1)·β, where KS and β are configurable parameter values, and B represents a BPRE for signal transmission on the first radio channel.

In one embodiment, one of the multiple components is a PUSCH power control adjustment state.

In one embodiment, one of the multiple components is indicated by a TPC command.

In one embodiment, the first power headroom is equal to the first maximum output power minus the third intermediate value, and the third intermediate value is configurable.

In one embodiment, the first power headroom is a power headroom level to which a difference value of the first maximum output power minus a third intermediate value belongs, and the third intermediate value is configurable.

In one embodiment, the third intermediate value is not the first intermediate value.

In one embodiment, the third intermediate value is equal to the first intermediate value.

In one embodiment, the third intermediate value is not equal to the first intermediate value.

In one embodiment, a calculation method of the third intermediate value is different from a calculation method of the first intermediate value.

In one embodiment, the third intermediate value is unrelated to the first radio channel.

In one embodiment, the third intermediate value is unrelated to frequency-domain resources occupied by the first radio channel.

In one embodiment, the third intermediate value is unrelated to a channel bandwidth occupied by the first radio channel.

In one embodiment, the third intermediate value is equal to a sum of the first component, a second component, and a third component, as well as the first component, the second component, and the third component are all configurable.

In one embodiment, the first component is higher-layer signaling configured.

In one embodiment, the first component is configured through an RRC signaling.

In one embodiment, the second component is configured by a higher-layer signaling.

In one embodiment, the second component is configured through an RRC signaling.

In one embodiment, the second component is equal to α · PL, where α is a configurable parameter value and PL is a downlink path loss estimate.

In one embodiment, the third component is configured by a higher-layer signaling.

In one embodiment, the third component is configured through an RRC signaling.

In one embodiment, the third component is a PUSCH power control adjustment state.

In one embodiment, the third component is indicated by a TPC command.

In one embodiment, a determination of the first power headroom is based on an actual PUSCH transmission.

In one embodiment, a determination of the first power headroom is based on a reference PUSCH transmission.

In one embodiment, the first power headroom is a Type 1 power headroom.

In one embodiment, the second information belongs to a MAC CE.

In one embodiment, the second information indicates the first power headroom and the first maximum output power.

In one embodiment, the second information explicitly indicates the first power headroom and the first maximum output power.

In one embodiment, the second information implicitly indicates the first power headroom and the first maximum output power.

In one embodiment, the first node transmits second information on the first radio channel, the second information indicates first maximum output power, and a determination of the first maximum output power is based on MPR under the second waveform condition.

In one embodiment, the second information explicitly indicates the first maximum output power.

In one embodiment, the second information implicitly indicates the first maximum output power.

In one embodiment, the expression that "the second information indicates first maximum output power" comprises: the second information indicates a power level to which the first maximum output power belongs.

In one embodiment, the first node transmits second information on the first radio channel, and the second information indicates at least a former of a first power headroom and first maximum output power; herein, the first maximum output power is used to determine the first power headroom, and a determination of the first maximum output power is based on an assumption that MPR is equal to 0dB.

In one embodiment, the first node transmits second information on the first radio channel, the second information indicates first maximum output power, and a determination of the first maximum output power is based on an assumption that MPR is equal to 0dB.

In one embodiment, a determination of the first maximum output power is based on an assumption that A-MPR is equal to 0dB.

In one embodiment, a determination of the first maximum output power is based on an assumption that P-MPR is equal to 0dB.

In one embodiment, a determination of the first maximum output power is based on an assumption that T_{C} is equal to 0dB.

In one embodiment, a determination of the first maximum output power is based on an assumption that the ΔT'_{C,c} is equal to 0dB.

In one embodiment, a determination of the first maximum output power is based on an assumption that the ΔT'_{IB,c} is equal to 0dB.

In one embodiment, a determination of the first maximum output power is based on an assumption that the P-MPR'_{c} is equal to 0dB.

In one embodiment, the first power headroom is associated with a first carrier of the first serving cell.

In one embodiment, the first radio channel is in a first slot, and the first power headroom is associated with the first slot.

In one embodiment, the first maximum output power is associated with a first carrier of a first serving cell.

In one embodiment, the first radio channel is in a first slot, and the first maximum output power is associated with the first slot.

In one embodiment, the first power headroom is associated to a first BWP of a first carrier of a first serving cell.

In one embodiment, the first maximum output power is a parameter related to transmit power of the first node on the first carrier of the first serving cell.

In one embodiment, the first power headroom is a parameter related to transmit power of the first node on the first BWP of the first carrier in the first serving cell.

In one embodiment, the first power headroom is a parameter related to transmit power of the first node in the first slot.

In one embodiment, the first maximum output power is a parameter related to transmit power of the first node in the first slot.

In one embodiment, the first maximum output power is a parameter related to transmit power of the first node in the first slot on the first carrier of the first serving cell.

In one embodiment, the first power headroom is a parameter related to transmit power of the first node in the first slot on the first BWP of the first carrier in the first serving cell.

In one embodiment, the first power headroom is a power headroom of the first node on the first carrier of the first serving cell.

In one embodiment, the first power headroom is a power headroom of the first node on the first BWP of the first carrier in the first serving cell.

In one embodiment, the first power headroom is a power headroom of the first node in a slot on the first carrier of the first serving cell.

In one embodiment, the first power headroom is a power headroom of the first node in a slot on the first BWP of the first carrier in the first serving cell.

In one embodiment, the first maximum output power is a configured maximum output power of the first node in a slot on the first carrier of the first serving cell.

In one embodiment, the first power headroom is a power headroom of the first node for a PUSCH transmission occasion on the first BWP of the first carrier of the first serving cell.

In one embodiment, the expression that "the first maximum output power is used to determine the first power headroom" comprises: the first maximum output power is used to calculate the first power headroom.

In one embodiment, the expression that "a determination of the first maximum output power" comprises: a calculation of the first maximum output power.

In one embodiment, the expression that "a determination of the first maximum output power" and "a calculation of the first maximum output power" in the present application are equivalent or interchangeable.

In one embodiment, the MPR under the second waveform condition is: MPR for the second waveform obtained by looking up the table.

In one embodiment, the MPR under the second waveform condition is: MPR defined for the second waveform.

In one embodiment, the MPR under the second waveform condition is: MPR defined for a combination of the second waveform, a modulation method adopted by a signal transmission on the first radio channel, resource block allocation information associated with the first radio channel.

### Embodiment 10

Embodiment 10 illustrates a schematic diagram of relations among MPR under a second waveform condition, a first lower limit power value and first maximum output power according to one embodiment of the present application, as shown in FIG. 10.

In embodiment 10, the first maximum output power is not less than a first lower limit power value, and MPR under the second waveform condition is used to determine the first lower limit power value.

In one embodiment, the MPR under the second waveform condition is used to calculate the first lower limit power value.

In one embodiment, the first maximum output power is set to be not greater than a first upper limit power value and not less than a first lower limit power value.

In one embodiment, under the condition that the first maximum output power is not greater than the first upper limit power value and not less than the first lower limit power value, the first node sets the first maximum output power on its own.

In one embodiment, the first lower limit power value is configurable.

In one embodiment, the first upper limit power value is configurable.

In one embodiment, the first lower limit power value is represented by P'_{CMAX_L,f,c}, and the P'_{CMAX_L,f,c} = MIN {P'_{EMAX,c}- ΔT'_{C,c}, (P'_{PowerClass} - ΔP' _{PowerClass}) - MAX(MAX(MPR'c + ΔMPR'c, A-MPR'c )+ ΔT'_{IB,c} + ΔT'_{C,c} + ΔT'_{RxSRS}, P-MPR'_{c}) }.

In one embodiment, the first lower limit power value is represented by P'_{CMAX_L,f,c}, and the P'_{CMAX_L,f,c} = MIN {P'_{EMAX,c}- ΔT'_{C,c}, (P'_{PowerClass} - ΔP'_{PowerClass} ) - MAX(MAX(MPR'_{c} + ΔMPR'_{c}, A-MPR'_{c} )+ ΔT'_{IB,c} + Δ T'_{C,c}, P-MPR'_{c}) }.

In one embodiment, the first upper limit power value is represented by P'_{CMAX_H,f,c}, and the P'_{CMAX_H,f,c} = MIN {P'_{EMAX,c}, P'_{PowerClass} - ΔP'_{PowerClass}}.

In one embodiment, the first upper limit power value is the target upper limit power value.

In one embodiment, the MIN represents taking a smaller one of the two.

In one embodiment, the MAX represents taking a larger one of the two.

In one embodiment, the P'_{EMAX,c} is configurable.

In one embodiment, the P'_{EMAX,c} is configured by an RRC signaling.

In one embodiment, the P'_{EMAX,c} is a value indicated by an *additionalPmax* field in an information element *p-Max* or an information element *NR-NS-PmaxList.*

In one embodiment, the P'_{EMAX,c} is the P_{EMAX,c}.

In one embodiment, the P'_{EMAX,c} is not the P_{EMAX,c}.

In one embodiment, the P'_{PowerClass} is equal to 23dBm.

In one embodiment, the P'_{PowerClass} is equal to 26dBm.

In one embodiment, the P'_{PowerClass} is equal to 29dBm.

In one embodiment, the P'_{PowerClass} is equal to 31dBm.

In one embodiment, the P'_{PowerClass} is maximum UE power without considering tolerance.

In one embodiment, the P'_{PowerClass} is the P_{PowerClass}.

In one embodiment, the P'_{PowerClass} is not the P_{PowerClass}.

In one embodiment, the ΔP'_{PowerClass} is configurable.

In one embodiment, the ΔP'_{PowerClass} is equal to -3dB.

In one embodiment, the ΔP'_{PowerClass} is equal to 3dB.

In one embodiment, the ΔP'_{PowerClass} is equal to 0dB.

In one embodiment, the ΔP'_{PowerClass} is the P_{PowerClass}.

In one embodiment, the ΔP'_{PowerClass} is not the P_{PowerClass}.

In one embodiment, the ΔT'_{C,c} is configurable.

In one embodiment, the ΔT'_{C,c} is equal to 0dB.

In one embodiment, the ΔT'_{C,c} is equal to 1.5dB.

In one embodiment, the ΔT'_{C,c} is the ΔT_{C,c}.

In one embodiment, the ΔT'_{C,c} is not the ΔT_{C,c}.

In one embodiment, the ΔT'_{IB,c} is configurable.

In one embodiment, the ΔT'_{IB,c} is an additional tolerance for the first serving cell.

In one embodiment, the ΔT'_{IB,c} is equal to 0dB.

In one embodiment, the ΔT'_{IB,c} is the ΔT_{IB,c}.

In one embodiment, the ΔT'_{IB,c} is not the ΔT_{IB,c}.

In one embodiment, the MPR'_{c} is the MPR under the second waveform condition.

In one embodiment, the A-MPR'_{c} is A-MPR under the second waveform condition.

In one embodiment, the MPR'_{c} is for the first serving cell.

In one embodiment, the A-MPR'_{c} is for the first serving cell.

In one embodiment, the ΔMPR'_{c} is for the first serving cell.

In one embodiment, the ΔMPR'_{c} is equal to 0.

In one embodiment, a value of the ΔMPR'_{c} is related to a relative channel bandwidth.

In one embodiment, the ΔMPR'_{c} is the ΔMPR_{c}.

In one embodiment, the ΔMPR'_{c} is not the ΔMPR_{c}.

In one embodiment, the ΔT'_{RxSRS} is equal to 0.

In one embodiment, the ΔT'_{RxSRS} is equal to 4.5dB.

In one embodiment, the ΔT'_{RxSRS} is equal to 7.5dB.

In one embodiment, the ΔT'_{RxSRS} is the ΔT_{RxSRS}.

In one embodiment, the ΔT'_{RxSRS} is not the ΔT_{RxSRS}.

In one embodiment, the P-MPR'_{c} is power management maximum power reduction.

In one embodiment, the P-MPR'_{c} is equal to 0dB.

In one embodiment, the P-MPR'_{c} is configurable.

In one embodiment, the first node reports the P-MPR'_{c}.

In one embodiment, the P-MPR'_{c} is the P-MPR_{c}.

In one embodiment, the P-MPR'_{c} is not the P-MPR_{c}.

### Embodiment 11

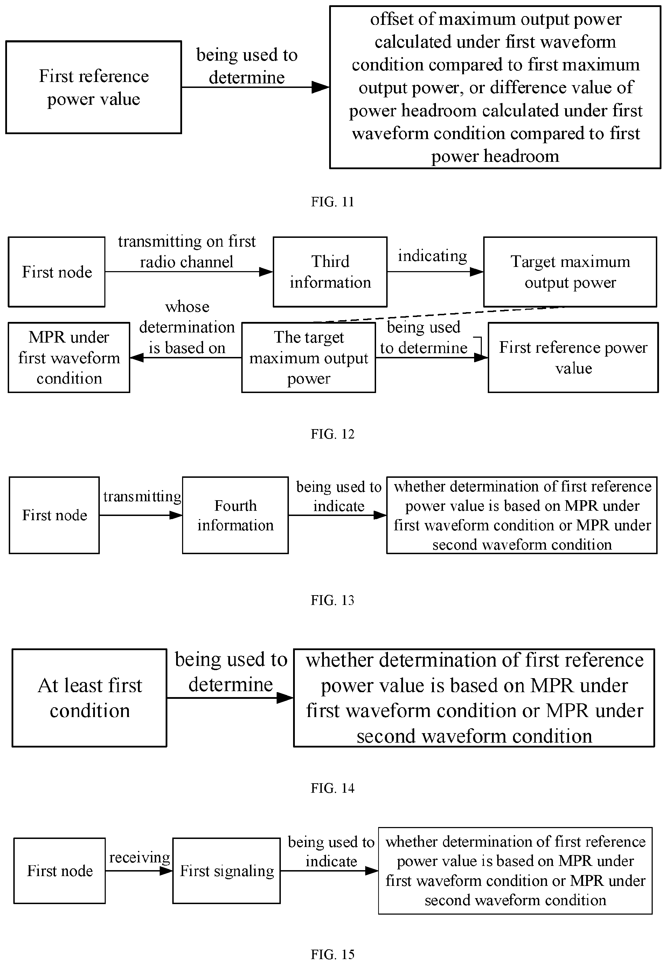

Embodiment 11 illustrates a schematic diagram of a first reference power value according to one embodiment of the present application, as shown in FIG.11.

In embodiment 11, the first reference power value is used to determine an offset of maximum output power calculated under the condition of the first waveform compared to the first maximum output power, or the first reference power value is used to determine a difference value of a power headroom calculated under the condition of the first waveform compared to the first power headroom.

In one embodiment, the first reference power value is used to determine an offset of the first maximum output power compared to maximum output power calculated under the condition of the first waveform, or to determine a difference value of the first power headroom compared to a power headroom calculated under the condition of the first waveform.

In one embodiment, the first reference power value indicates an offset of maximum output power calculated under the condition of the first waveform compared to the first maximum output power.

In one embodiment, the first reference power value indicates an offset of the target maximum output power compared to the first maximum output power.

In one embodiment, the first reference power value indicates an offset of a power headroom calculated under the condition of the first waveform compared to the first power headroom.

In one embodiment, the first reference power value indicates an offset of the first maximum output power compared to maximum output power calculated under the condition of the first waveform.

In one embodiment, the first reference power value indicates an offset of the first maximum output power compared to the target maximum output power.

In one embodiment, the first reference power value indicates an offset of the first power headroom compared to a power headroom calculated under the condition of the first waveform.

In one embodiment, the first reference power value is equal to a difference value of a maximum output power calculated under the condition of the first waveform minus the first maximum output power.

In one embodiment, the first reference power value is equal to a difference value of the target maximum output power minus the first maximum output power.

In one embodiment, the first reference power value is equal to a difference value of a calculated power headroom under the condition of the first waveform minus the first power headroom.

In one embodiment, the first reference power value is equal to a difference value of the first maximum output power minus maximum output power calculated under the condition of the first waveform.

In one embodiment, the first reference power value is equal to a difference value of the first maximum output power minus the target maximum output power.

In one embodiment, the first reference power value is equal to a difference value of the first power headroom minus a power headroom calculated under the condition of the first waveform.

In one embodiment, the first reference power value indicates a difference value of a maximum output power calculated under the condition of the first waveform minus the first maximum output power.

In one embodiment, the first reference power value indicates a difference value of the target maximum output power minus the first maximum output power.

In one embodiment, the first reference power value indicates a difference value of a calculated power headroom under the condition of the first waveform minus the first power headroom.

In one embodiment, the first reference power value indicates a difference value of the first maximum output power minus maximum output power calculated under the condition of the first waveform.

In one embodiment, the first reference power value indicates a difference value of the first maximum output power minus the maximum output power.

In one embodiment, the first reference power value indicates a difference value of the first power headroom minus a power headroom calculated under the condition of the first waveform.

In one embodiment, the offset proposed in the present application refers to: difference value.

In one embodiment, the offset proposed in the present application refers to: a level of difference.

In one embodiment, the offset proposed in the present application is in dB terms.

In one embodiment, the difference value proposed in the present application is in dB terms.

### Embodiment 12

Embodiment 12 illustrates a schematic diagram of relations among a first node, third information, MPR under a condition of a first waveform, target maximum output power, and a first reference power value according to one embodiment of the present application, as shown in FIG. 12.

In embodiment 12, the first node in the present application transmits third information on the first radio channel, and the third information indicates target maximum output power; herein, the target maximum output power is used to determine the first reference power value, and a determination of the target maximum output power is based on MPR under the condition of the first waveform.

In one embodiment, the first radio channel is used to carry the third information.

In one embodiment, bits in at least the third information are transmitted on the first radio channel after undergoing at least part of CRC attachment, code block segmentation, code block CRC attachment, channel coding, rate matching, code block concatenation, scrambling, modulation, layer mapping, transform precoding, precoding, resource block mapping, multicarrier symbol generation, and modulation and upconversion.

In one embodiment, bits in at least the third information is transmitted on the first radio channel after undergoing at least part of CRC attachment, Code block segmentation, Code block CRC attachment, Channel coding, Rate matching, Code block concatenation, Scrambling, Modulation, Layer mapping, Transform precoding, Precoding, Mapping to virtual resource blocks, and Mapping from virtual to physical resource blocks.

In one embodiment, a TB bearing bits in at least the third information is transmitted on the first radio channel.

In one embodiment, a TB comprising bits in the third information is transmitted on the first radio channel after undergoing at least channel coding.

In one embodiment, a TB bearing bits in at least the first information and bits in the third information is transmitted on the first radio channel.

In one embodiment, a TB comprising bits in the first information and bits in the third information is transmitted on the first radio channel after undergoing at least channel coding.

In one embodiment, a transmission of the third information occupies the first radio channel.

In one embodiment, the third information comprises at least one bit.

In one embodiment, the third information consists of 6 bits.

In one embodiment, the third information consists of up to 8 bits.

In one embodiment, the third information consists of up to 16 bits.

In one embodiment, the third information is represented by at least one bit.

In one embodiment, the third information is represented by 6 bits.

In one embodiment, the third information is represented by up to 8 bits.

In one embodiment, the third information is represented by up to 16 bits.

In one embodiment, the third information is a physical-layer signaling.

In one embodiment, the third information is DCI (Downlink control information) format.

In one embodiment, the third information is one of DCI format 0_0, DCI format 0_1, or DCI format 0_2.

In one embodiment, the third information is DCI format 0_0, and for the specific meaning of the DCI format 0_0, refer to chapter 7.3.1.1 in 3GPP TS38.212.

In one embodiment, the third information is DCI format 0_1, and for the specific meaning of the DCI format 0_1, refer to chapter 7.3.1.1 in 3GPP TS38.212.

In one embodiment, the third information is DCI format 0_2, and for the specific meaning of the DCI format 0_2, refer to chapter 7.3.1.1 in 3GPP TS38.212.

In one embodiment, the third information is one of DCI format 1_0, DCI format 1_1 or DCI format 1_2.

In one embodiment, the third information is DCI format 1_0, and for the specific meaning of the DCI format 1_0, refer to chapter 7.3.1.2 in 3GPP TS38.212.

In one embodiment, the third information is DCI format 1_1, and for the specific meaning of the DCI format 1_1, refer to chapter 7.3.1.2 in 3GPP TS38.212.

In one embodiment, the third information is DCI format 1_2, and for the specific meaning of the DCI format 1_2, refer to chapter 7.3.1.2 in 3GPP TS38.212.

In one embodiment, the third information comprises one or multiple fields in a DCI format.

In one embodiment, the third information is an uplink grant signaling.

In one embodiment, the third information is a higher-layer signaling.

In one embodiment, the third information is an RRC signaling.

In one embodiment, the third information comprises one or multiple fields in an RRC signaling.

In one embodiment, the third information comprises an IE.

In one embodiment, the third information comprises one or multiple fields in an IE.

In one embodiment, the third information is a Medium Access Control layer Control Element (MAC CE).

In one embodiment, the third information comprises one or multiple fields of a MAC CE.

In one embodiment, the third information belongs to a MAC CE.

In one embodiment, the third information belongs to a MAC CE related to a PHR (Power headroom report).

Typically, the first information and the third information belong to a same MAC CE.

In one embodiment, the first information and the third information both belong to a same Single Entry PHR MAC CE.

In one embodiment, the first information and the third information both belong to a same Multiple Entry PHR MAC CE.

In one embodiment, the first information and the third information both belong to a same MAC CE identified by a MAC subheader with a value of 54 in an LCID field.

In one embodiment, the first information and the third information both belong to a same MAC CE identified by a MAC subheader with a value of 56 in an LCID field.

In one embodiment, the first information and the third information both belong to a same MAC CE identified by a MAC subheader with a value of 57 in an LCID field.

In one embodiment, a value of an LCID field corresponding to a MAC CE to which the first information and the third information belong is not equal to either 54, 56, or 57.

In one embodiment, the first information and the third information respectively belong to different MAC CEs.

In one embodiment, the third information explicitly indicates the target maximum output power.

In one embodiment, the third information implicitly indicates the target maximum output power.

In one embodiment, the expression that "the target maximum output power is used to determine the first reference power value" comprises: the target maximum output power is used to calculate the first reference power value.

In one embodiment, the expression that "a determination of the target maximum output power" comprises: a calculation of the target maximum output power.

In one embodiment, the expression that "a determination of the target maximum output power" and "a calculation of the target maximum output power" in the present application are equivalent or interchangeable.

### Embodiment 13

Embodiment 13 illustrates a schematic diagram of relations among a first node, fourth information and a first reference power value according to one embodiment of the present application, as shown in FIG. 13.

In embodiment 13, the first node in the present application transmits fourth information; herein, the fourth information is used to indicate whether a determination of the first reference power value is based on MPR under the condition of the first waveform or MPR under the second waveform condition.

In one embodiment, a value of the fourth information indicates that a determination of the first reference power value is based on MPR under the condition of the first waveform.

In one embodiment, bits in the fourth information are transmitted after undergoing at least part of CRC attachment, code block segmentation, code block CRC attachment, channel coding, rate matching, code block concatenation, scrambling, modulation, layer mapping, transform precoding, precoding, resource block mapping, multicarrier symbol generation, and modulation and upconversion.

In one embodiment, bits in the fourth information is transmitted after undergoing at least part of CRC attachment, Code block segmentation, Code block CRC attachment, Channel coding, Rate matching, Code block concatenation, Scrambling, Modulation, Layer mapping, Transform precoding, Precoding, Mapping to virtual resource blocks, and Mapping from virtual to physical resource blocks.

In one embodiment, the fourth information is transmitted on the first radio channel.

In one embodiment, a TB bearing bits in at least the fourth information is transmitted on the first radio channel.

In one embodiment, a TB comprising bits in the fourth information is transmitted on the first radio channel after undergoing at least channel coding.

In one embodiment, a TB bearing bits in at least the first information and bits in the fourth information is transmitted on the first radio channel.

In one embodiment, a TB comprising bits in the first information and bits in the fourth information is transmitted on the first radio channel after undergoing at least channel coding.

In one embodiment, a transmission of the fourth information occupies the first radio channel.

In one embodiment, the fourth information is transmitted on a radio channel other than the first radio channel.

In one embodiment, the fourth information comprises at least one bit.

In one embodiment, the fourth information consists of 6 bits.

In one embodiment, the fourth information consists of up to 8 bits.

In one embodiment, the fourth information consists of up to 16 bits.

In one embodiment, the fourth information is represented by at least one bit.

In one embodiment, the fourth information is represented by 6 bits.

In one embodiment, the fourth information is represented by up to 8 bits.

In one embodiment, the fourth information is represented by up to 16 bits.

In one embodiment, the fourth information is a physical-layer signaling.

In one embodiment, the fourth information is DCI (Downlink control information) format.

In one embodiment, the fourth information is one of DCI format 0_0, DCI format 0_1, or DCI format 0_2.

In one embodiment, the fourth information is DCI format 0_0, and for the specific meaning of the DCI format 0_0, refer to chapter 7.3.1.1 in 3GPP TS38.212.

In one embodiment, the fourth information is DCI format 0_1, and for the specific meaning of the DCI format 0_1, refer to chapter 7.3.1.1 in 3GPP TS38.212.

In one embodiment, the fourth information is DCI format 0_2, and for the specific meaning of the DCI format 0_2, refer to chapter 7.3.1.1 in 3GPP TS38.212.

In one embodiment, the fourth information is one of DCI format 1_0, DCI format 11 or DCI format 1_2.

In one embodiment, the fourth information is DCI format 1_0, and for the specific meaning of the DCI format 1_0, refer to chapter 7.3.1.2 in 3GPP TS38.212.

In one embodiment, the fourth information is DCI format 1_1, and for the specific meaning of the DCI format 1_1, refer to chapter 7.3.1.2 in 3GPP TS38.212.

In one embodiment, the fourth information is DCI format 1_2, and for the specific meaning of the DCI format 1_2, refer to chapter 7.3.1.2 in 3GPP TS38.212.

In one embodiment, the fourth information comprises one or multiple fields in a DCI format.

In one embodiment, the fourth information is an uplink grant signaling.

In one embodiment, the fourth information is a higher-layer signaling.

In one embodiment, the fourth information is an RRC signaling.

In one embodiment, the fourth information comprises one or multiple fields in an RRC signaling.

In one embodiment, the fourth information comprises an IE.

In one embodiment, the fourth information comprises one or multiple fields in an IE.

In one embodiment, the fourth signaling is a MAC CE (Medium Access Control layer Control Element).

In one embodiment, the fourth information comprises one or multiple fields of a MAC CE.

In one embodiment, the fourth information belongs to a MAC CE.

In one embodiment, the fourth information belongs to a MAC CE related to a PHR (Power headroom report).

In one embodiment, the fourth information belongs to a Single Entry PHR MAC CE.

In one embodiment, the fourth information belongs to a Multiple Entry PHR MAC CE.

In one embodiment, the fourth information belongs to a MAC CE identified by a MAC subheader with a value of 54 in an LCID field.

In one embodiment, the fourth information belongs to a MAC CE identified by a MAC subheader with a value of 56 in an LCID field.

In one embodiment, the fourth information belongs to a MAC CE identified by a MAC subheader with a value of 57 in an LCID field.

In one embodiment, a value of an LCID field corresponding to a MAC CE to which the fourth information belongs is not equal to either 54, 56, or 57.

In one embodiment, the first information and the fourth information belong to a same MAC CE.

In one embodiment, the first information and the fourth information respectively belong to different MAC CEs.

In one embodiment, the fourth information explicitly indicates whether a determination of the first reference power value is based on MPR under the condition of the first waveform or MPR under the second waveform condition.

In one embodiment, the fourth information implicitly indicates whether a determination of the first reference power value is based on MPR under the condition of the first waveform or MPR under the second waveform condition.

In one embodiment, only when the fourth information indicates that a determination of the first reference power value is based on MPR under the condition of the first waveform, a determination of the first reference power value is based on the MPR under the condition of the first waveform.

In one embodiment, when the fourth information indicates that a determination of the first reference power value is based on MPR under the second waveform condition, the first reference power value is a first power headroom.

In one embodiment, when the fourth information indicates that a determination of the first reference power value is based on MPR under the second waveform condition, the first reference power value is first maximum output power.

Typically, the first information and the fourth information belong to a same MAC CE.

In one embodiment, the first information and the fourth information belong to different MAC CEs, respectively.

### Embodiment 14

Embodiment 14 illustrates a schematic diagram of relations between a first condition and a first reference power value according to one embodiment of the present application, as shown in FIG. 14.

In embodiment 14, at least a first condition is used to determine whether a determination of the first reference power value is based on MPR under the condition of the first waveform or MPR under the second waveform condition.

In one embodiment, only when at least a first condition is not satisfied, a determination of the first reference power value is based on MPR under the condition of the first waveform.

In one embodiment, only when at least a first condition is satisfied, a determination of the first reference power value is based on MPR under the condition of the first waveform.

In one embodiment, when the first condition is satisfied, a determination of the first reference power value is based on MPR under the second waveform condition; when the first condition is not satisfied, a determination of the first reference power value is based on MPR under the condition of the first waveform.

In one embodiment, when the first condition is not satisfied, a determination of the first reference power value is based on MPR under the second waveform condition; when the first condition is satisfied, a determination of the first reference power value is based on MPR under the condition of the first waveform.

In one embodiment, the first condition comprises: whether a power headroom calculated based on MPR under the second waveform condition is greater than or not less than a first threshold.

In one embodiment, the first condition comprises: whether a power headroom calculated based on MPR under the second waveform condition is less than or not greater than a first threshold.

In one embodiment, the first condition comprises: whether a power headroom calculated based on MPR under the condition of the first waveform is less than or not greater than a first threshold.

In one embodiment, the first condition comprises: whether a power headroom calculated based on MPR under the condition of the first waveform is greater than or not less than a first threshold.

In one embodiment, the first condition comprises: whether a power headroom calculated based on MPR under the second waveform condition for a first carrier of a first serving cell for most recent consecutive K1 time(s) is greater than or not less than a first threshold, where K1 is a positive integer.

In one embodiment, the first condition comprises: whether a power headroom calculated based on MPR under the second waveform condition for a first carrier of a first serving cell for most recent consecutive K1 time(s) is less than or not greater than a first threshold, where K1 is a positive integer.

In one embodiment, the first condition comprises: whether a power headroom calculated based on MPR under the condition of the first waveform for a first carrier of a first serving cell for most recent consecutive K1 time(s) is greater than or not less than a first threshold, where K1 is a positive integer.

In one embodiment, the first condition comprises: whether a power headroom calculated based on MPR under the condition of the first waveform for a first carrier of a first serving cell for most recent consecutive K1 time(s) is less than or not greater than a first threshold, where K1 is a positive integer.

In one embodiment, the first condition comprises: whether a power headroom calculated based on MPR under the second waveform condition for a first BWP of a first carrier of a first serving cell for most recent consecutive K1 time(s) is greater than or not less than the first threshold, where K1 is a positive integer.

In one embodiment, the first condition comprises: whether a power headroom calculated based on MPR under the second waveform condition for a first BWP of a first carrier of a first serving cell for most recent consecutive K1 time(s) is less than or not greater than a first threshold, where K1 is a positive integer.

In one embodiment, the first condition comprises: whether a power headroom calculated based on MPR under the condition of the first waveform for a first BWP of a first carrier of a first serving cell for most recent consecutive K1 time(s) is greater than or not less than the first threshold, where K1 is a positive integer.

In one embodiment, the first condition comprises: whether a power headroom calculated based on MPR under the condition of the first waveform for a first BWP of a first carrier of a first serving cell for most recent consecutive K1 time(s) is less than or not greater than the first threshold, where K1 is a positive integer.

In one embodiment, K1 is equal to 1.

In one embodiment, K1 is greater than 1.

In one embodiment, K1 is not greater than 1024.

In one embodiment, K1 is not greater than 65536.

In one embodiment, K1 is pre-defined.

In one embodiment, K1 is configurable.

In one embodiment, the first threshold is predefined.

In one embodiment, the first threshold is configurable.

In one embodiment, the first threshold is an integer.

In one embodiment, the first threshold value is 0.

In one embodiment, the first threshold is a non-negative number.

In one embodiment, the first threshold is measured by dB.

In one embodiment, the first condition is used to determine at least one condition in a first condition set, and the first condition set is used to determine whether a determination of the first reference power value is based on MPR under the condition of the first waveform or MPR under the second waveform condition.

In one embodiment, only when all conditions in the first condition set are satisfied, a determination of the first reference power value is based on MPR under the condition of the first waveform.

In one subembodiment of the above embodiment, when there exists a condition in the first condition set not being satisfied, a determination of the first reference power value is based on MPR under the second waveform condition.

In one embodiment, only when all conditions in the first condition set are not satisfied, a determination of the first reference power value is based on MPR under the condition of the first waveform.

In one subembodiment of the above embodiment, when there exists a condition in the first condition set being satisfied, a determination of the first reference power value is based on MPR under the second waveform condition.

In one embodiment, only when there exists at least one condition in the first condition set being satisfied, a determination of the first reference power value is based on MPR under the condition of the first waveform.

In one subembodiment of the above embodiment, when all conditions in the first condition set are not satisfied, a determination of the first reference power value is based on MPR under the second waveform condition.

In one embodiment, only when there exists at least one condition in the first condition set not being satisfied, a determination of the first reference power value is based on MPR under the condition of the first waveform.

In one subembodiment of the above embodiment, when all conditions in the first condition set are satisfied, a determination of the first reference power value is based on MPR under the second waveform condition.

In one embodiment, the first condition set comprises at least one condition.

In one embodiment, the first condition set comprises multiple conditions.

In one embodiment, a condition in the first condition set comprise: a PHR related reconfiguration occurs.

In one embodiment, a condition in the first condition set comprise: a PHR related timer expires.

In one embodiment, a condition in the first condition set comprise: a PHR related timer starts or restarts.

In one embodiment, one condition in the first condition set is related to BWP handover.

In one embodiment, one condition in the first condition set is related to an activation or a deactivation of a cell.

In one embodiment, the first condition is one condition in the first condition set.

In one embodiment, whether a first counter reaches K1 is used to determine whether a determination of the first reference power value is based on MPR under the condition of the first waveform or MPR under the second waveform condition; each time the first condition is satisfied, the first counter is incremented by 1.

In one embodiment, only when the first counter reaches K1, a calculation of the first reference power value is determined to be based on MPR under the condition of the first waveform.

In one embodiment, only when the first counter does not reach K1, a calculation of the first reference power value is determined to be based on MPR under the condition of the first waveform.

In one embodiment, when PHR related reconfiguration occurs, the first counter is reset.

In one embodiment, if a calculation of the first reference power value is determined to be based on MPR under the condition of the first waveform, the first counter is reset.

In one embodiment, if a calculation of the first reference power value is determined to be based on MPR under the second waveform condition at the time of occurrence, the first counter is reset.

In one embodiment, one condition in the first condition set comprise: the first counter reaches K1.

In one embodiment, one condition in the first condition set comprise: the first counter does not reach K1.

### Embodiment 15

Embodiment 15 illustrates a schematic diagram of relations among a first node, a first signaling and a first reference power value according to one embodiment of the present application, as shown in FIG. 15.

In embodiment 15, the first node in the present application receives a first signaling, herein, the first signaling is used to indicate whether a determination of the first reference power value is based on MPR under the condition of the first waveform or MPR under the second waveform condition.

In one embodiment, a field in the first signaling is used to indicate whether a determination of the first reference power value is based on MPR under the condition of the first waveform or MPR under the second waveform condition.

In one embodiment, a value of the field in the first signaling indicates that a determination of the first reference power value is based on MPR under the condition of the first waveform.

In one embodiment, the first signaling comprises at least one bit.

In one embodiment, the first signaling is represented by at least one bit.

In one embodiment, the first signaling is a physical-layer signaling.

In one embodiment, the first signaling is Downlink control information (DCI) format.

In one embodiment, the first signaling is one of DCI format 0_0, DCI format 0_1 or DCI format 0_2.

In one embodiment, the first signaling is DCI format 0_0, and for the specific meaning of the DCI format 0_0, refer to chapter 7.3.1.1 in 3GPP TS38.212.

In one embodiment, the first signaling is DCI format 0_1, and for the specific meaning of the DCI format 0_1, refer to chapter 7.3.1.1 in 3GPP TS38.212.

In one embodiment, the first signaling is DCI format 0_2, and for the specific meaning of the DCI format 0_2, refer to chapter 7.3.1.1 in 3GPP TS38.212.

In one embodiment, the first signaling is one of DCI format 1_0, DCI format 1_1 or DCI format 1_2.

In one embodiment, the first signaling is DCI format 1_0, and for the specific meaning of the DCI format 1_0, refer to chapter 7.3.1.2 in 3GPP TS38.212.

In one embodiment, the first signaling is DCI format 1_1, and for the specific meaning of the DCI format 1_1, refer to chapter 7.3.1.2 in 3GPP TS38.212.

In one embodiment, the first signaling is DCI format 1_2, and for the specific meaning of the DCI format 1_0, refer to chapter 7.3.1.2 in 3GPP TS38.212.

In one embodiment, the first signaling comprises one or multiple fields in a DCI format.

In one embodiment, the first signaling is an UpLink Grant Signalling.

In one embodiment, the first signaling is a DownLink Grant Signalling.

In one embodiment, the first signaling is a higher-layer signaling.

In one embodiment, the first signaling is an RRC signaling.

In one embodiment, the first signaling comprises one or multiple fields in an RRC signaling.

In one embodiment, the first signaling comprises an IE (Information Element).

In one embodiment, the second signaling comprises one or multiple fields in an IE.

In one embodiment, the first signaling is a Medium Access Control layer Control Element (MAC CE).

In one embodiment, the first signaling comprises one or multiple fields in a MAC CE.

In one embodiment, the first signaling belongs to a MAC CE.

In one embodiment, the first signaling is a scheduling signaling of the first radio channel.

In one embodiment, the first signaling explicitly indicates whether a determination of the first reference power value is based on MPR under the condition of the first waveform or MPR under the second waveform condition.

In one embodiment, the first signaling implicitly indicates whether a determination of the first reference power value is based on MPR under the condition of the first waveform or MPR under the second waveform condition.

In one embodiment, only when the first signaling indicates that a determination of the first reference power value is based on MPR under the condition of the first waveform, a determination of the first reference power value is based on the MPR under the condition of the first waveform.

In one embodiment, when the first signaling indicates that a determination of the first reference power value is based on MPR under the second waveform condition, the first reference power value is a first power headroom.

In one embodiment, when the first signaling indicates that a determination of the first reference power value is based on MPR under the second waveform condition, the first reference power value is first maximum output power.

### Embodiment 16

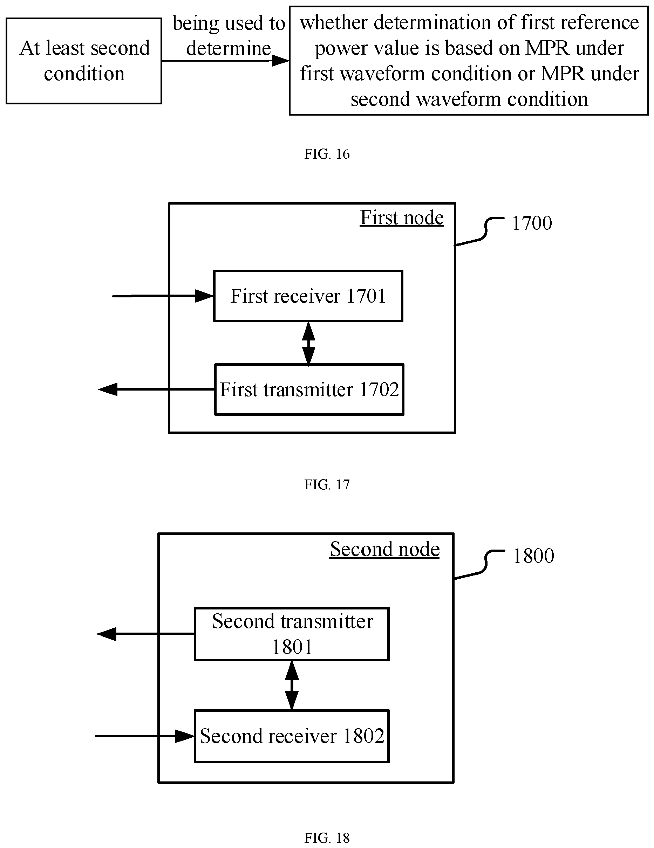

Embodiment 16 illustrates a schematic diagram of relations between a second condition and a first reference power value according to one embodiment of the present application, as shown in FIG. 16.

In embodiment 16, at least a second condition is used to determine whether a determination of the first reference power value is based on MPR under the condition of the first waveform or MPR under the second waveform condition.

In one embodiment, the second condition is a condition related to a power headroom calculated based on MPR under the condition of the first waveform.

In one embodiment, the second condition is a condition related to a power headroom calculated based on MPR under the second waveform condition.

In one embodiment, the first reference power value is associated with a first carrier of a first serving cell; at least a second condition is used to determine whether a determination of the first reference power value is based on MPR under the condition of the first waveform or MPR under the second waveform condition; the second condition comprises: a power headroom of the first carrier of the first serving cell reported for the most recent consecutive K2 times is not calculated based on MPR under the condition of the first waveform.

In one embodiment, only when at least a second condition is not satisfied, a determination of the first reference power value is based on MPR under the condition of the first waveform.

In one embodiment, only when at least a second condition is satisfied, a determination of the first reference power value is based on MPR under the condition of the first waveform.

In one embodiment, when the second condition is satisfied, a determination of the first reference power value is based on MPR under the second waveform condition; when the second condition is not satisfied, a determination of the first reference power value is based on MPR under the condition of the first waveform.

In one embodiment, when the second condition is not satisfied, a determination of the first reference power value is based on MPR under the second waveform condition; when the second condition is satisfied, a determination of the first reference power value is based on MPR under the condition of the first waveform.

In one embodiment, the first reference power value is associated with a first carrier of a first serving cell.

In one embodiment, the first reference power value is associated with a first BWP of a first carrier of a first serving cell.

In one embodiment, the first reference power value is associated with a first BWP of a first carrier of a first serving cell, and the second condition comprises: a power headroom of the first BWP of the first carrier of the first serving cell reported for the most recent consecutive K2 times is not calculated based on MPR under the condition of the first waveform.

In one embodiment, the first reference power value is associated with a first carrier of a first serving cell, and the second condition comprises: a power headroom of the first carrier of the first serving cell reported for the most recent consecutive K2 times is not calculated based on MPR under the condition of the first waveform.

In one embodiment, the first reference power value is associated with a first BWP of a first carrier of a first serving cell, and the second condition comprises: a power headroom of the first BWP of the first carrier of the first serving cell reported for the most recent consecutive K2 time(s) is calculated based on MPR under the condition of the first waveform.

In one embodiment, the first reference power value is associated with a first carrier of a first serving cell, and the second condition comprises: a power headroom of the first carrier of the first serving cell reported for the most recent consecutive K2 time(s) is calculated based on MPR under the condition of the first waveform.

In one embodiment, the first reference power value is associated with a first BWP of a first carrier of a first serving cell, and the second condition comprises: a power headroom of the first BWP of the first carrier of the first serving cell reported for most recent consecutive K2 time(s) is not calculated based on MPR under the second waveform condition.

In one embodiment, the first reference power value is associated with a first carrier of a first serving cell, and the second condition comprises: a power headroom of the first carrier of the first serving cell reported for the most recent consecutive K2 time(s) is not calculated based on MPR under the second waveform condition.

In one embodiment, the first reference power value is associated with a first BWP of a first carrier of a first serving cell, and the second condition comprises: a power headroom of the first BWP of the first carrier of the first serving cell reported for most recent consecutive K2 time(s) is calculated based on MPR under the second waveform condition.

In one embodiment, the first reference power value is associated with a first carrier of a first serving cell, and the second condition comprises: a power headroom of the first carrier of the first serving cell reported for the most recent consecutive K2 time(s) is calculated based on MPR under the second waveform condition.

In one embodiment, the second condition comprises: a power headroom of the first carrier of the reported first serving cell is not calculated based on MPR under the condition of the first waveform.

In one embodiment, the second condition comprises: a power headroom of the first carrier of the reported first serving cell is calculated based on MPR under the condition of the first waveform.

In one embodiment, the second condition comprises: a power headroom of the first carrier of the reported first serving cell is not calculated based on MPR under the second waveform condition.

In one embodiment, the second condition comprises: a power headroom of the first carrier of the reported first serving cell is calculated based on MPR under the second waveform condition.

In one embodiment, the second condition comprises: a power headroom of the first BWP of the first carrier of the reported first serving cell is not calculated based on MPR under the condition of the first waveform.

In one embodiment, the second condition comprises: a power headroom of the first BWP of the first carrier of the reported first serving cell is calculated based on MPR under the condition of the first waveform.

In one embodiment, the second condition comprises: a power headroom of the first BWP of the first carrier of the reported first serving cell is not calculated based on MPR under the second waveform condition.

In one embodiment, the second condition comprises: a power headroom of the first BWP of the first carrier of the reported first serving cell is calculated based on MPR under the second waveform condition.

In one embodiment, the second condition comprises: a power headroom calculated based on MPR under the second waveform condition for the first carrier of the first serving cell is reported once.

In one embodiment, the second condition comprises: a power headroom calculated based on MPR under the condition of the first waveform for the first carrier of the first serving cell is reported once.

In one embodiment, the second condition comprises: a power headroom calculated based on MPR under the second waveform condition for the first BWP of the first carrier of the first serving cell is reported once.

In one embodiment, the second condition comprises: a power headroom calculated based on MPR under the condition of the first waveform for the first BWP of the first carrier of the first serving cell is reported once.

In one embodiment, K2 is a positive integer.

In one embodiment, K2 is equal to 1.

In one embodiment, K2 is greater than 1.

In one embodiment, K2 is not greater than 1024.

In one embodiment, K2 is not greater than 65536.

In one embodiment, K2 is pre-defined.

In one embodiment, K2 is configurable.

In one embodiment, the second condition is used to determine at least one condition in a second condition set, and the second condition set is used to determine whether a determination of the first reference power value is based on MPR under the condition of the first waveform or MPR under the second waveform condition.

In one embodiment, only when all conditions in the second condition set are satisfied, a determination of the first reference power value is based on MPR under the condition of the first waveform.

In one subembodiment of the above embodiment, when there exists one condition in the second condition set not being satisfied, a determination of the first reference power value is based on MPR under the second waveform condition.

In one embodiment, only when all conditions in the second condition set are not satisfied, a determination of the first reference power value is based on MPR under the condition of the first waveform.

In one subembodiment of the above embodiment, when there exists one condition in the second condition set being satisfied, a determination of the first reference power value is based on MPR under the second waveform condition.

In one embodiment, only when there exists at least one condition in the second condition set being satisfied, a determination of the first reference power value is based on MPR under the condition of the first waveform.

In one subembodiment of the above embodiment, when all conditions in the second condition set are not satisfied, a determination of the first reference power value is based on MPR under the second waveform condition.

In one embodiment, only when there exists at least one condition in the second condition set not being satisfied, a determination of the first reference power value is based on MPR under the condition of the first waveform.

In one subembodiment of the above embodiment, when all conditions in the second condition set are satisfied, a determination of the first reference power value is based on MPR under the second waveform condition.

In one embodiment, the second condition set comprises at least one condition.

In one embodiment, the second condition set comprises multiple conditions.

In one embodiment, one condition in the second condition set comprises: a PHR related reconfiguration occurs.

In one embodiment, one condition in the second condition set comprises: a PHR related timer expires.

In one embodiment, one condition in the second condition set comprises: a PHR related timer starts or restarts.

In one embodiment, one condition in the second condition set is related to BWP switching.

In one embodiment, one condition in the second condition set is related to an activation or a deactivation of a cell.

In one embodiment, the second condition is one condition in the second condition set.

In one embodiment, whether a second counter reaches K2 is used to determine whether a determination of the first reference power value is based on MPR under the condition of the first waveform or MPR under the second waveform condition; each time the second condition is satisfied, the second counter is incremented by 1.

In one embodiment, only when the second counter reaches K2, a calculation of the first reference power value is determined to be based on MPR under the condition of the first waveform.

In one subembodiment of the above embodiment, when the second counter does not reach K2, a calculation of the first reference power value is determined to be based on MPR under the second waveform condition.

In one embodiment, only when the second counter does not reach K2, a calculation of the first reference power value is determined to be based on MPR under the condition of the first waveform.

In one subembodiment of the above embodiment, when the second counter reaches K2, a calculation of the first reference power value is determined to be based on MPR under the second waveform condition.

In one embodiment, if a PHR related reconfiguration occurs, the second counter is reset.

In one embodiment, if a calculation of the first reference power value is determined to be based on MPR under the condition of the first waveform, the second counter is reset.

In one embodiment, if a calculation of the first reference power value is determined to be based on MPR under the second waveform condition, the second counter is reset.

In one embodiment, if a power headroom calculated based on MPR under the condition of the first waveform for the first carrier of the first serving cell is reported, the second counter is reset; the second condition comprises: a power headroom calculated based on MPR under the second waveform condition for the first carrier of the first serving cell is reported once.

In one embodiment, if a power headroom calculated based on MPR under the second waveform condition for the first carrier of the first serving cell is reported, the second counter is reset; the second condition comprises: a power headroom calculated based on MPR under the condition of the first waveform for the first carrier of the first serving cell is reported once.

In one embodiment, if a power headroom calculated based on MPR under the condition of the first waveform for the first BWP of the first carrier of the first serving cell is reported, the second counter is reset; the second condition comprises: a power headroom calculated based on MPR under the second waveform condition for the first BWP of the first carrier of the first serving cell is reported once.

In one embodiment, if a power headroom calculated based on MPR under the second waveform condition for the first BWP of the first carrier of the first serving cell is reported, the second counter is reset; the second condition comprises: a power headroom calculated based on MPR under the condition of the first waveform for the first BWP of the first carrier of the first serving cell is reported once.

In one embodiment, one condition in the second condition set comprises: the second counter reaches K2.

In one embodiment, one condition in the second condition set comprises: the second counter does not reach K2.

### Embodiment 17

Embodiment 17 illustrates a structural block diagram of a processor in a first node, as shown in FIG. 17. In FIG. 17, a processor 1700 of a first node comprises a first receiver 1701 and a first transmitter 1702.

In one embodiment, the first node 1700 is a base station.

In one embodiment, the first node 1700 is a UE.

In one embodiment, the first node 1700 is a relay node.

In one embodiment, the first node 1700 is a vehicle-mounted communication device.

In one embodiment, the first node 1700 is a UE that supports V2X communications.

In one embodiment, the first node 1700 is a relay node that supports V2X communications.

In one embodiment, the first node 1700 is a UE that supports dynamic waveform switching.

In one embodiment, the first node 1700 is a UE that supports operations on shared spectrum.

In one embodiment, the first receiver 1701 comprises at least one of the antenna 452, the receiver 454, the multi-antenna receiving processor 458, the receiving processor 456, the controller/ processor 459, the memory 460 or the data source 467 in FIG. 4 of the present application.

In one embodiment, the first receiver 1701 comprises at least the first five of the antenna 452, the receiver 454, the multi-antenna receiving processor 458, the receiving processor 456, the controller/ processor 459, the memory 460 or the data source 467 in FIG. 4 of the present application.

In one embodiment, the first receiver 1701 comprises at least the first four of the antenna 452, the receiver 454, the multi-antenna receiving processor 458, the receiving processor 456, the controller/ processor 459, the memory 460 or the data source 467 in FIG. 4 of the present application.

In one embodiment, the first receiver 1701 comprises at least the first three of the antenna 452, the receiver 454, the multi-antenna receiving processor 458, the receiving processor 456, the controller/ processor 459, the memory 460 or the data source 467 in FIG. 4 of the present application.

In one embodiment, the first receiver 1701 comprises at least the first two of the antenna 452, the receiver 454, the multi-antenna receiving processor 458, the receiving processor 456, the controller/ processor 459, the memory 460 or the data source 467 in FIG. 4 of the present application.

In one embodiment, the first transmitter 1702 comprises at least one of the antenna 452, the transmitter 454, the multi-antenna transmitting processor 457, the transmitting processor 468, the controller/ processor 459, the memory 460, or the data source 467 in FIG. 4 of the present application.

In one embodiment, the first transmitter 1702 comprises at least first five of the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter 1702 comprises at least first four of the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter 1702 comprises at least first three of the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter 1702 comprises at least first two of the antenna 452, the transmitter 454, the multi-antenna transmitting processor 457, the transmitting processor 468, the controller/ processor 459, the memory 460, and the data source 467 in FIG. 4 of the present application.

In embodiment 17, the first transmitter 1702 transmits first information on a first radio channel, and the first information indicates a first reference power value; herein, a determination of the first reference power value is based on MPR under a condition of a first waveform, and the first radio channel adopts a second waveform; the first waveform and the second waveform are two different physical layer waveforms.

In one embodiment, the first transmitter 1702 transmits second information on the first radio channel, and the second information indicates at least a former of a first power headroom and first maximum output power; herein, the first maximum output power is used to determine the first power headroom, and a determination of the first maximum output power is based on MPR under the second waveform condition.

In one embodiment, the first transmitter 1702 transmits third information in the first radio channel, and the third information indicates target maximum output power; herein, the target maximum output power is used to determine the first reference power value, and a determination of the target maximum output power is based on the MPR under the condition of the first waveform.

In one embodiment, the first transmitter 1702 transmit fourth information; herein, the fourth information is used to indicate whether a determination of the first reference power value is based on MPR under the condition of the first waveform or MPR under the second waveform condition.

In one embodiment, at least a first condition is used to determine whether a calculation of the first reference power value is based on MPR under the condition of the first waveform or MPR under the second waveform condition; the first condition comprises: whether a power headroom calculated based on MPR under the second waveform condition is greater than or not less than a first threshold.

In one embodiment, the first receiver 1701 receives a first signaling; herein, the first signaling is used to indicate whether a calculation of the first reference power value is based on MPR under the condition of the first waveform or MPR under the second waveform condition.

In one embodiment, the first reference power value is associated with a first carrier of a first serving cell; at least a second condition is used to determine whether a determination of the first reference power value is based on MPR under the condition of the first waveform or MPR under the second waveform condition; the second condition comprises: a power headroom of the first carrier of the first serving cell reported for the most recent consecutive K2 times is not calculated based on MPR under the condition of the first waveform, or, a power headroom of the first carrier of the reported first serving cell is not calculated based on MPR under the condition of the first waveform.

In one embodiment, the first reference power value is used to determine an offset between maximum output power calculated under the condition of the first waveform and the first maximum output power.

In one embodiment, the first reference power value is used to determine a difference value between a calculated power headroom under the condition of the first waveform compared to the first power headroom.

In one embodiment, the first transmitter 1702 transmits first information on a first radio channel, and the first information indicates a first reference power value; herein, a determination of the first reference power value is based on MPR under a condition of a first waveform, and the first radio channel adopts a second waveform; the first waveform is a DFT-s-OFDM waveform and the second waveform is a CP-OFDM waveform, or, the second waveform is a DFT-s-OFDM waveform and the first waveform is a CP-OFDM waveform.

### Embodiment 18

Embodiment 18 illustrates a structure block diagram of a processor in a second node, as shown in FIG. 18. In FIG. 18, a processor 1800 in the second node comprises a second transmitter 1801 and a second receiver 1802.

In one embodiment, the second node 1800 is a UE.

In one embodiment, the second node 1800 is a base station.

In one embodiment, the second node 1800 is satellite.

In one embodiment, the second node 1800 is a relay node.

In one embodiment, the second node 1800 is a vehicle-mounted communication device.

In one embodiment, the second node 1800 is a UE supporting V2X communications.

In one embodiment, the second node 1800 is a device that supports dynamic waveform switching.

In one embodiment, the second node 1800 is a device that supports operations on shared spectrum.

In one embodiment, the second transmitter 1801 comprises at least one of the antenna 420, the transmitter 418, the multi-antenna transmitting processor 471, the transmitting processor 416, the controller/ processor 475 or the memory 476 in FIG. 4 of the present application.

In one embodiment, the second transmitter 1801 comprises at least the first five of the antenna 420, the transmitter 418, the multi-antenna transmitting processor 471, the transmitting processor 416, the controller/ processor 475 or the memory 476 in FIG. 4 of the present application.

In one embodiment, the second transmitter 1801 comprises at least the first four of the antenna 420, the transmitter 418, the multi-antenna transmitting processor 471, the transmitting processor 416, the controller/ processor 475 and the memory 476 in FIG. 4 of the present application.

In one embodiment, the second transmitter 1801 comprises at least the first three of the antenna 420, the transmitter 418, the multi-antenna transmitting processor 471, the transmitting processor 416, the controller/ processor 475 and the memory 476 in FIG. 4 of the present application.

In one embodiment, the second transmitter 1801 comprises at least the first two of the antenna 420, the transmitter 418, the multi-antenna transmitting processor 471, the transmitting processor 416, the controller/ processor 475 and the memory 476 in FIG. 4 of the present application.

In one embodiment, the second receiver 1802 comprises at least one of the antenna 420, the receiver 418, the multi-antenna receiving processor 472, the receiving processor 470, the controller/ processor 475 or the memory 476 in FIG. 4 of the present application.

In one embodiment, the second receiver 1802 comprises at least first five of the antenna 420, the receiver 418, the multi-antenna receiving processor 472, the receiving processor 470, the controller/ processor 475 and the memory 476 in FIG. 4 of the present application.

In one embodiment, the second receiver 1802 comprises at least first four of the antenna 420, the receiver 418, the multi-antenna receiving processor 472, the receiving processor 470, the controller/ processor 475 and the memory 476 in FIG. 4 of the present application.

In one embodiment, the second receiver 1802 comprises at least first three of the antenna 420, the receiver 418, the multi-antenna receiving processor 472, the receiving processor 470, the controller/ processor 475 and the memory 476 in FIG. 4 of the present application.

In one embodiment, the second receiver 1802 comprises at least first two of the antenna 420, the receiver 418, the multi-antenna receiving processor 472, the receiving processor 470, the controller/ processor 475 and the memory 476 in FIG. 4 of the present application.

In embodiment 18, the second receiver 1802 receives first information on a first radio channel, and the first information indicates a first reference power value; herein, a determination of the first reference power value is based on MPR under a condition of a first waveform, and the first radio channel adopts a second waveform; the first waveform and the second waveform are two different physical layer waveforms.

In one embodiment, the second receiver 1802 receives second information on the first radio channel, and the second information indicates at least a former of a first power headroom and first maximum output power; herein, the first maximum output power is used to determine the first power headroom, and a determination of the first maximum output power is based on MPR under the second waveform condition.

In one embodiment, the second receiver 1802 receives third information in the first radio channel, and the third information indicates target maximum output power; herein, the target maximum output power is used to determine the first reference power value, and a determination of the target maximum output power is based on the MPR under the condition of the first waveform.

In one embodiment, the second receiver 1802 receives fourth information; herein, the fourth information is used to indicate whether a determination of the first reference power value is based on MPR under the condition of the first waveform or MPR under the second waveform condition.

In one embodiment, at least a first condition is used to determine whether a calculation of the first reference power value is based on MPR under the condition of the first waveform or MPR under the second waveform condition; the first condition comprises: whether a power headroom calculated based on MPR under the second waveform condition is greater than or not less than a first threshold.

In one embodiment, the second transmitter 1801 transmits a first signaling; herein, the first signaling is used to indicate whether a calculation of the first reference power value is based on MPR under the condition of the first waveform or MPR under the second waveform condition.

In one embodiment, the first reference power value is associated with a first carrier of a first serving cell; at least a second condition is used to determine whether a determination of the first reference power value is based on MPR under the condition of the first waveform or MPR under the second waveform condition; the second condition comprises: a power headroom of the first carrier of the first serving cell reported for the most recent consecutive K2 times is not calculated based on MPR under the condition of the first waveform, or, a power headroom of the first carrier of the reported first serving cell is not calculated based on MPR under the condition of the first waveform.

In one embodiment, the first reference power value is used to determine an offset between maximum output power calculated under the condition of the first waveform and the first maximum output power.

In one embodiment, the first reference power value is used to determine a difference value between a calculated power headroom under the condition of the first waveform compared to the first power headroom.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts and other wireless communication devices. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts and other wireless communication devices. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts, etc. The base station or network side equipment in the present application includes but is not limited to macro-cellular base stations, micro-cellular base stations, home base stations, relay base station, eNB, gNB, Transmitter Receiver Point (TRP), GNSS, relay satellites, satellite base stations, space base stations, test device, test equipment, test instrument and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first transmitter, transmitting first information on a first radio channel, the first information indicating a first reference power value;
wherein a determination of the first reference power value is based on MPR (maximum power reduction) under a condition of a first waveform, and the first radio channel adopts a second waveform; the first waveform and the second waveform are two different physical layer waveforms.

2. The first node according to claim 1, comprising:
the first transmitter, transmitting second information on the first radio channel, the second information indicating at least a former of a first power headroom and first maximum output power;
wherein the first maximum output power is used to determine the first power headroom, and a determination of the first maximum output power is based on MPR under a condition of the second waveform.

3. The first node according to claim 1 or 2, comprising:
the first transmitter, transmitting third information on the first radio channel, the third information indicating target maximum output power;
wherein the target maximum output power is used to determine the first reference power value, and a determination of the target maximum output power is based on the MPR under the first waveform condition.

4. The first node according to any of claims 1-3,the first transmitter, transmitting fourth information;
wherein the fourth information is used to indicate whether a determination of the first reference power value is based on MPR under the first waveform condition or MPR under the second waveform condition.

5. The first node according to any of claims 1-4, wherein at least a first condition is used to determine whether a calculation of the first reference power value is based on MPR under the first waveform condition or MPR under the second waveform condition; the first condition comprises: whether a power headroom calculated based on MPR under the second waveform condition greater than or not less than a first threshold.

6. The first node according to any of claims 1-5, comprising:
a first receiver, receiving a first signaling;
wherein the first signaling is used to indicate whether a calculation of the first reference power value is based on MPR under the first waveform condition or MPR under the second waveform condition.

7. The first node according to any of claims 1-6, wherein the first reference power value is associated with a first carrier of a first serving cell; at least a second condition is used to determine whether a determination of the first reference power value is based on MPR under the first waveform condition or an MPR under the second waveform condition; the second condition comprises: a power headroom of the first carrier of the first serving cell reported for the most recent consecutive K2 times is not calculated based on MPR under the condition of the first waveform, or, a power headroom of the first carrier of the reported first serving cell is not calculated based on MPR under the condition of the first waveform.

8. A second node for wireless communications, comprising:
a second receiver, receiving first information on a first radio channel, the first information indicating a first reference power value;
wherein a determination of the first reference power value is based on MPR (maximum power reduction) under a condition of a first waveform, and the first radio channel adopts a second waveform; the first waveform and the second waveform are two different physical layer waveforms.

9. A method in a first node for wireless communications, comprising:
transmitting first information on a first radio channel, the first information indicating a first reference power value;
wherein a determination of the first reference power value is based on MPR (maximum power reduction) under a condition of a first waveform, and the first radio channel adopts a second waveform; the first waveform and the second waveform are two different physical layer waveforms.

10. A method in a second node for wireless communications, comprising:
receiving first information on a first radio channel, the first information indicating a first reference power value;
wherein a determination of the first reference power value is based on MPR (maximum power reduction) under a condition of a first waveform, and the first radio channel adopts a second waveform; the first waveform and the second waveform are two different physical layer waveforms.
